# EUROPEAN PATENT SPECIFICATION

(11) **EP 1 911 307 B1**
(45) Date of publication and mention of the grant of the patent: **16.09.2015**
(21) Application number: 06765153.9
(22) Date of filing: 28.07.2006
(51) Int. Cl.: H04W 88/08, H04W 12/06, H04W 24/02, H04W 28/08, H04W 84/04, H04L 12/54

(54) **PRIVATE ACCESS POINT CONTAINING A SIM CARD**
EINE SIM-KARTE ENTHALTENDER PRIVATER ZUGANGSPUNKT
POINT D'ACCES PERSONNEL CONTENANT UNE CARTE SIM

(30) Priority: 01.08.2005 GB 0515888; 30.05.2006 GB 0610650
(43) Date of publication of application: 16.04.2008
(60) Divisional application: 10185751.4
(73) Proprietor: Ubiquisys Limited, Swindon SN5 6NX (GB)
(72) Inventor: KEEVILL, Peter, Bath BA2 3NQ (GB); GIUSTINA, Andrea, I-20129 Milano (IT); BYRNE, Richard, Berkshire RG18 9HX (GB); DA SILVA, Cristavao, Cambridge CB1 7UP (GB)
(74) Representative: O'Connell, David Christopher
(86) International application number: PCT/GB2006/002838
(87) International publication number: WO 2007/015075

(56) References cited:
- WO-A-00/28752
- WO-A-2004/086788
- WO-A-2005/060292
- US-A1- 5 778 322
- US-A1- 2004 081 159
- US-B1- 6 615 035
- "Digital cellular telecommunications system (Phase 2+)" ETSI STANDARDS, EUROPEAN TELECOMMUNICATIONS STANDARDS INSTITUTE, SOPHIA-ANTIPO, FR, vol. 3-G1, no. V620, June 2005 (2005-06), XP014030795 ISSN: 0000-0001

## Description

This invention relates to an access point, and in particular to an access point for a mobile communications network.

It is proposed that, in order to allow an operator of a mobile communications network, such as a cellular communications network, to increase the coverage area of the network, users should be able to install access points, or base stations, for use within or close to their own homes or offices. Such base stations can establish communications with the core network of the mobile communications network over the user's existing broadband internet connection.

In order to achieve this, it is necessary for the base station to be able to communicate securely with the core network of the mobile communications network, and to allow a mobile device communicating with the base station to communicate securely with the core network.

US 5,778,322 A1 discloses a base station that includes a SIM card that is used in order to store configuration data for the base station (frequency and power level). US 6,615,035 B1 discloses a base station that includes a SIM card reader in order to read subscriber SIM cards. The subscriber data is transferred into the base station in order to configure the base station to perform calls for the subscriber.

According to a first aspect of the present invention, as disclosed in claims 1-22, there is provided a base station for a cellular communications system, comprising an interface for a SIM card.

### BRIEF DESCRIPTION OF DRAWINGS

Figure 1 is a block schematic diagram of a system incorporating a base station in accordance with the present invention.
Figure 2 is a block schematic diagram illustrating the hardware architecture of a base station in accordance with the present invention.
Figure 3 is a block schematic diagram illustrating the software architecture of a base station in accordance with the present invention.
Figure 4 is a block schematic diagram of a further system incorporating a base station in accordance with the present invention.
Figure 5 illustrates a conventional network architecture.
Figure 6 illustrates a network architecture in accordance with an aspect of the present invention.
Figure 7 illustrates a signalling procedure in accordance with an aspect of the invention.
Figure 8 is a block schematic diagram of a part of the further system of Figure 4 in use.
Figure 9 illustrates a further signalling procedure in accordance with an aspect of the invention.
Figure 10 illustrates a further network architecture in accordance with an aspect of the present invention.
Figure 11 illustrates a further network architecture in accordance with an aspect of the present invention.
Figure 12 illustrates the further network architecture of claim 10, in use.
Figure 13 illustrates a further signalling procedure in accordance with an aspect of the invention.

### DETAILED DESCRIPTION OF PREFERRED EMBODIMENTS

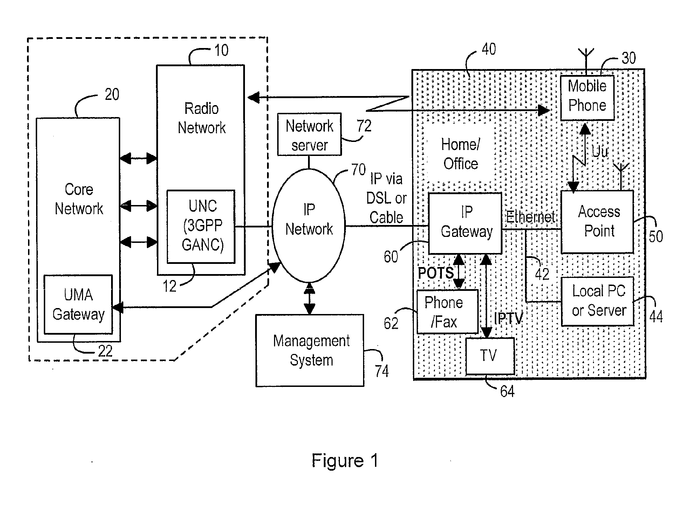

Figure 1 is a block schematic diagram, illustrating a system architecture. A mobile network operator (MNO) owns and operates a wireless communications network, including a radio network 10, including a network of cellular basestations (not shown), and a core network 20, having a connection into the fixed telephone network. These are generally conventional, except as described below.

A mobile phone 30, when roaming in the territory covered by the wireless communications network, is able to establish a wireless connection with one of the cellular basestations, in order to communicate with other telephones in the fixed telephone network, or with other mobile phones, which have established their own wireless connections with a cellular basestation, and hence with the fixed telephone network.

In accordance with the present invention, there is provided, for example within a home or office 40 or in another location where additional wireless coverage is required, a further basestation, or access point, 50. This access point 50 is provided for use by the owner of the premises where it is located, but is integrated into the wireless communications network. That is, the access point shares the part of the radio frequency spectrum allocated to that wireless communications network, by having allocated to it, either permanently or temporarily, some of the group of channels. This group of channels is thus shared with other basestations, which may serve macrocells, microcells, picocells, or even "femtocells", in the public, wide area network. As a result, the mobile phone 30 can roam from the access point 50 to another basestation when leaving the immediate vicinity of the access point 50, or can roam to the access point 50 from another basestation when returning to the immediate vicinity of the access point 50.

The access point 50 therefore acts as a basestation within the relevant wireless communications network. For example, it can allow an entirely conventional and unmodified mobile phone 30 or other user device to establish a connection for voice and/or data services using GSM/GPRS and/or UMTS air interfaces. Of course, the access point 50 can be enabled to establish connections with the mobile phone 30 using the standard air interface of any suitable cellular wireless communications system.

The access point 50 has a connection for an Ethernet Local Area Network (LAN) 42, within the home or office 40. As shown in Figure 1, the access point 50 can connect over the Ethernet LAN 42 to one or more local PCs or servers 44.

The access point 50 can connect over the Ethernet LAN 42 to an IP gateway device 60. The IP gateway device 60 provides an IP connection over an IP network 70, for example the internet, to the MNO network either via a Digital Subscriber Line (DSL) or via other IP transport methods such as a digital multimedia Cable network. Thus, the existing IP connection from the home or office can be used to provide backhaul from the access point 50. Flexible interfacing to the operator's core network 20 can be provided via connections to either the MNO Core Network or Radio Access Network, using the UMA standard through a UMA gateway 22. This approach enables low-cost transport of data and voice using Voice-over-Internet Protocol (VoIP) techniques.

The connection from the IP gateway 60 over the IP network 70 into the MNO Radio Access Network 10 is provided by a UMA Unlicensed Network Controller (UNC) 12, which has been standardised by 3GPP as a Generic Access Network Controller (GANC). Other non-standardised solutions to interface to the Radio Access Network 10 could also be employed as an alternative approach. Direct connection to the operator's Core Network can be achieved through use of a SIP Interface between the access point and a suitable gateway such as a SIP Gateway or an IP Multimedia Subsystem.

In this illustrated embodiment, the DSL or cable IP gateway device 60 includes provision for connection of a POTS telephone or fax device 62, and audio/video connections for providing IPTV services to a TV 64. The access point 50 includes a services environment which allows these facilities to be integrated into the MNO network, enabling sophisticated new services for users.

In an alternative implementation of the invention, the access point 50 can be integrated as a component within the IP gateway device 60; an internal IP connection then links the embedded access point component to the router functions within the IP gateway device. This configuration can potentially provide a lower overall cost and is convenient for operators looking to provide gateway units which unify data, fixed voice, multimedia and mobile services.

Thus, while the mobile phone 30 is within the home or office 40, or otherwise within the coverage area of the access point 50, it can connect into the MNO network in the same way as via any other basestation in the cellular wireless communications network.

Figure 1 also shows a network server 72 connected to the IP network 70. As will be appreciated, where the IP network 70 is the internet, a very large number of servers and other devices are connected to the network. As will be described in more detail below, the user of the mobile phone 30 can access such devices by means of the access point 50.

Figure 1 also shows a management system 74, connected to the IP network 70. The management system 74 is provided by the mobile network operator for managing the operation of the access point 50, including controlling the available services.

For example, as mentioned above, and as described in more detail below, a user of the mobile phone 30 can establish a connection through the access point 50 over the Ethernet LAN 42 to one or more local PCs or servers 44, or through the IP gateway device 60 to another device connected thereto, or through the IP gateway device 60 to a network server 72 connected to the IP network 70. These connections can be established without passing traffic over the core network 20 of the wireless communications network. The management system 74 is able to define the devices, or the IP addresses, with which such connections can be established. Then, these connections can be established with only a restricted number of devices or IP addresses, if desired by the mobile network operator.

Also, the management system 74 is able to specify the channels (which may be defined by frequencies, time slots, and/or spreading codes, depending on the particular cellular wireless communications system) allocated to the access point 50. These channels may be allocated semi-permanently, or may be changed regularly, depending on the requirements of the network as a whole.

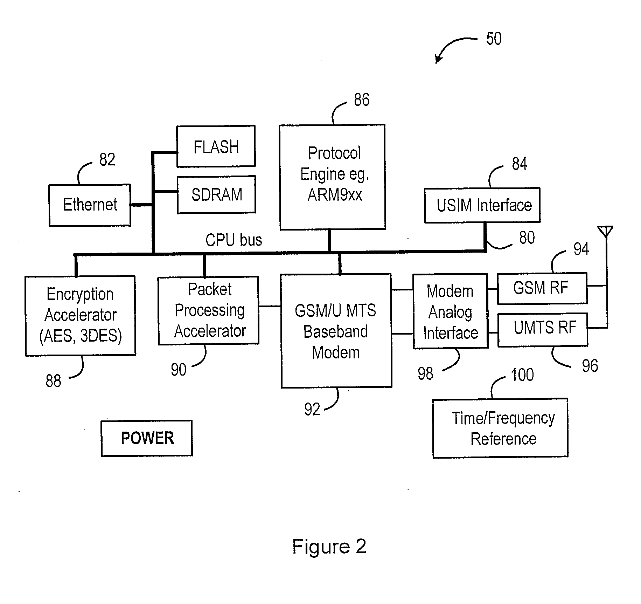

Figure 2 is a block schematic diagram, showing the hardware architecture of the access point 50. The architecture consists of a number of functional blocks interconnected by a processor bus 80 such as the ARM AMBA bus.

The access point 50 includes various external wired interfaces, including an RJ45 Ethernet 10/100 interface 82, which provides a connection to a local LAN for connection to the IP gateway device 60 and thence to the MNO network and the Internet, and also provides access to other devices attached to the Ethernet network, such as one or more PC 44, or such as an IPTV 64 for advanced service provision. The access point 50 can therefore have an IP-based interface to the Radio Access Network 10 through adaptation of the standard UMA UNC, or Core Network via SIP as opposed to the usual lub (UMTS) or Abis (GSM) interfaces.

The access point 50 also includes a Subscriber Identification Module (SIM) card interface 84 to allow use of a standard SIM card to provide a unique identifier for the access point 50, in order to identify the unit to the management system 74 and the operator's radio network 10 and core network 20, and thereby enable various services to be provided.

The access point 50 also includes a Protocol Engine 86, implemented as a small embedded CPU such as an ARM926 (with appropriate peripherals) supported by a dedicated co-processor 88 for encryption and a dedicated co-processor 90 for packet processing, which will offload the main CPU for specific intensive tasks. For example, encryption of the IPSec packet payload is handled by the encryption accelerator 88, which supports AES and 3DES encryption protocols. The VPN connection of the access point 50 to the UNC 12 and the management system 74 will make use of the internal encryption processing; user VPN encryption processing may be handled outside the access point 50.

The main CPU is also responsible for the configuration and control, via the main CPU bus 80, of all functional blocks in the system including a baseband modem 92 and the Ethernet port 82. The system software image, including configuration data for all system functional blocks is stored in FLASH memory 94 within the access point 50; two complete system images are stored so that updated system images can be downloaded to the access point 50 from the management system 74, whilst the previous image is retained as a fall back option in case of corrupted download. access point 50

The main CPU peripherals include: watchdog timers for software sanity checking, JTAG and serial ports for in-system debug, and a GPIO for system control including LED status indication, system power management and system alarm gathering.

The access point 50 has a first RF Interface 94 for GSM at either 900MHz or 1800MHz and a second RF Interface 96 for UMTS at 2100MHz. It therefore supports simultaneous operation of GSM and UMTS. For the GSM and UMTS receive paths both uplink (basestation receive) and downlink (terminal receive) frequencies are accessible; for the transmit paths only downlink (basestation transmit) frequencies are available. At installation, the access point 50 selects a downlink RF carrier frequency with the lowest noise/interference for both GSM and UMTS from permitted lists of GSM and UMTS carrier frequencies provided by the management system 74; permitted downlink frequencies will be scanned by the access point 50 with its receive path configured in UE mode and its transmit path disabled.

The access point 50 is designed to provide cellular service over a distance of less than 50m to stationary or pedestrian (for example, no more than 10km/h) users within a building, and hence the transmit power required is dramatically reduced compared to a conventional macrocell basestation. However, the functionality described herein can be provided in any basestation, operating at any power level, and handling any type of mobile user.

The RF interfaces 94, 96 are connected through a modem analog interface 98 to the baseband modem 92, which supports sample rate processing, chip-rate processing (UMTS only) and symbol rate processing for the GSM and UMTS basestation modems.

The access point 50 will have limited GSM Mobile Station (MS) and UMTS User Equipment (UE) modem functionality, in order to allow the access point 50 to recover the Broadcast Channel (BCH) from local GSM/UMTS basestations and other nearby access points. UE modem mode will be entered during initial installation to survey the local RF environment and at regular intervals after the initial installation to monitor the RF environment and, if necessary, modify the access point configuration.

The baseband modem 92 is implemented using a software-based architecture to ensure high adaptability over a field life of up to 5 years, for example, being upgradeable to allow future enhancement to HSDPA or EDGE service to be delivered in the field without the need to replace the unit.

The access point 50 includes timing and frequency references 100 which provide sufficient accuracy for GSM and UMTS basestation operation over a 5 year lifetime.

This embodiment of the access point 50 therefore provides various operational features. For example, it is user installable, self-configuring, and adaptive to the surrounding RF environment. Access can be restricted to specified users using standard GSM/UMTS protocols. Further, multiple access point units installed in a large indoor area connected to a common Ethernet LAN can manage handoffs between themselves without the intervention of other systems in the radio network 10 or the core network 20 of the operator's cellular network.

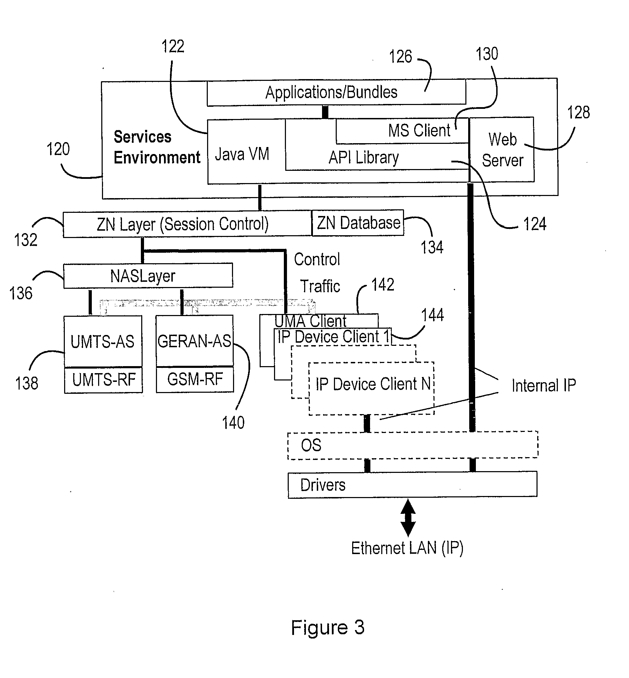

Figure 3 provides a conceptual overview of the architecture of the software running on the protocol engine 86 of the access point 50, together with the encryption accelerator 88 and the packet processing accelerator 90, with an emphasis on the Services Environment and its control paths into the lower stack layers.

The access point 50 includes a services platform, which can exploit the potential of the union of four data networks, namely the external MNO core network 20, the external internet 70, mobile devices such as the mobile phone 30 (via GSM/UMTS), and the home network (via Ethernet).

The access point stack architecture includes a powerful services environment 120. The services environment is Java-based and includes a Java Virtual Machine 122, and an access point library 124, in the form of an API interface which allows applications 126 to interact with the lower layers of the stack to control calls/data sessions, traffic routing and many other functions. The services environment 120 also includes a web server 128, which provides a convenient interface to the user for configuration and monitoring and also for selection and purchase of desired applications, with security protected options for debug and maintenance via a local PC. The services environment 120 also includes a management system (MS) client 130, which configures the access point 50 and monitors various aspects of its operation. The MS client 130 controls the provisioning system so that any component of the software in the system, as shown in Figure 3, can be replaced and restarted.

As mentioned above, the services environment 120 also includes various applications 126, for example created by the mobile network operator or the IP gateway 60 provider, which can be pre-installed in the access point 50, or can be delivered via download from the operator's network at the operator's initiation or at user request, for example as part of a chargeable service.

A network (ZN) layer 132 of the software provides session control functions to manage and implement the service flows and policies that determine how the access point 50 is configured and operates for any particular Mobile Network Operator (MNO) configuration and end-user settings. Configuration parameters are loaded to the ZN database 134 via the management system (MS) client 130, Java applications or via the Web Server 128. These parameters provide the "rules" for the session control operation within the access point. Session control functions include: implementation of the policies for registration, call control and traffic flow/routing for the access point 50 on the MNO core network; control of the UMA client (to be described further below) for registration, call control and traffic flow; and efficient management of access point access point resources in delivering GSM/UMTS services and interacting with other services via the IP gateway 60.

Below the network (ZN) layer 132 of the software, there is the Non Access Stratum (NAS) functionality 136, which is required in order for services to be provided to the UE when the MNO GSM/UMTS core network 20 is not connected to the access point 50. This functionality enables the access point 50 to offer the usual GSM/UMTS services, such as SMS and MMS which mobile users are accustomed to, whilst not being connected to the GSM/UMTS core network in the conventional manner. In order for such services to be offered, the access point 50 contains a condensed subset of the core network functions usually contained in the Mobile Switching Centre (MSC), Serving GPRS Service Node (SGSN), GSM Basestation Subsystem (BSS), and UMTS Radio Network Subsystem (RNS).

The Non-Access Stratum layer 136, as implemented in the access point 50, therefore provides various functions which are typically included in MSC and SGSN nodes within a conventional GSM/UMTS network. One such feature is call control (CC). This supports call establishment between two peer entities, mainly for circuit-switched connections.

The NAS layer 136 also provides session management (SM), for control of packet data sessions; Short Message Service (SMS) function, for transmission of SMS messages between the access point 50 and the network SMS service centre; supplementary services (SS), such as call waiting, call holding, and multi-party calling; Mobility Management/GPRS Mobility Management (MM/GMM), for management of UE mobility elements, such as location registration, authentication, and ciphering; and control functions associated with the SIM card which may be fitted to the access point 50. The access point 50 also provides packet routing capability, which is essentially GGSN functionality in a conventional network.

Below the NAS functionality, there is the Access Stratum functionality, specifically the UMTS Access Stratum functions 138 and the GERAN Access Stratum functions 140.

The UMTS Access Stratum functionality 138 comprises some SGSN functionality, Radio Network Controller (RNC) functionality and an interface to the UMTS physical layer implemented on the baseband modem 92. The RNC and physical layer interface functionality is required for all access point services supporting UMTS, regardless of the core network interface used.

In more detail, the Access Stratum functionality comprises the following elements:
Packet Data Convergence Protocol (PDCP)
Header compression and decompression of IP data streams (optional), transfer of user data, maintenance of PDCP sequence numbers (typically part of an SGSN function).
Radio Resources Control (RRC)
Broadcast of information related to the NAS and AS; establishment, maintenance and release of RRC connections; establishment, reconfiguration and release of Radio Bearers and radio resources; RRC connection mobility functions; control of requested QoS; UE measurement reporting and control; outer loop power control; ciphering control.
Radio Link Control (RLC)
Transmission and reception of signaling and data packets, including buffering, segmentation and concatenation of packets. Comprises three entity types, for acknowledged mode, unacknowledged mode, and transparent modes.
Medium Access Control (MAC)
Mapping between logical channels and transport channels, selection of the appropriate Transport Formats for each Transport Channel, priority handling between UEs, multiplexing/demultiplexing of upper layer PDUs to/from transport block (sets) on common and dedicated transport channels.
UMTS Layer 1
Interface to the UMTS modem functions implemented on the Baseband Modem.

The GERAN access stratum functionality 140 comprises BSS and some limited SGSN functionality. The BSS functionality is required for support of all GSM/GPRS/EDGE services, regardless of the interface used between the access point 50 and the MNO core network 20.

The SGSN functionality of the GERAN access stratum functionality 140 comprises the following elements:
Sub-Network Dependent Convergence Protocol (SNDCP)
Multiplexing of several packet data protocols; data compression/decompression (optional); header compression/decompression (optional); segmentation and reassembly.
Logical Link Control (LLC)
LLC provides peer-to-peer unacknowledged and acknowledged data transfer, arid the GPRS ciphering functionality.

The BSS functionality of the GERAN access stratum functionality 140 comprises the following elements:
Radio Link Control/Medium Access Control (RLC /MAC)
RLC/MAC supports acknowledged and unacknowledged modes; segmentation and reassembly of LLC PDUs; multiplexing to several physical channels; broadcast of system information.
Radio Resource Management (RR)
RR connection establishment, maintenance, and releases; system information broadcast; packet data resource management.
GSM/GPRS Layer 1
Interface to the GSM/GPRS/EDGE modem functions implemented in the Baseband Modem.

Thus, as described above, the access point 50 includes some functionality typically located in the higher levels of the Radio Access Network for UMTS and GSM standards. This is partly because, in order to be able to route data traffic to the MNO core network, or to the internet or to devices on the local area network, the access point 50 must have access to the data packets flowing to and from the remote devices. However it is highly desirable that the air interface to the cellular devices is secured by the same ciphering mechanisms used in the rest of the cellular network. Therefore, if it is required to maintain this, then, in order to enable the service and routing capabilities described above, the access point 50 should contain the termination function for the air interface ciphering (namely, the RLC/MAC layer in UMTS).

The software running in the access point 50 also includes a UMA client 142, allowing the access point 50 to use the UMA protocol in a non-standard configuration. Specifically, the standard UMA protocol is designed to enable a GSM MS or UMTS UE, which includes a UMA client and an unlicensed spectrum air interface such as IEEE802.11b/g or Bluetooth, to communicate with the GSM/UMTS core network using unlicensed spectrum. However, the implementation in the access point 50 uses the UMA client as part of the network interface of a GSM/UMTS base station, so that the UMA protocols, developed to communicate with a GSM/UMTS core network via an Unlicensed Network Controller (UNC), can be adapted to manage calls handled by that base station, including handover to/from the macro network. As noted previously, a SIP Interface can be used as an alternative approach.

The access point 50 also includes one or more IP device clients 144, to enable the transfer of calls, control information or data between the "mobile domain" (mobile phones camped onto the access point 50 and traffic paths into the MNO core network 20) and other IP devices, such as a VoIP/POTS port within the IP gateway 60 for fixed-line phone/fax services, an AV port within the IP gateway 60 for IPTV and/or video services, PC's or Servers 44 on the local Ethernet LAN, or remote webpages and/or servers 72 accessible over the internet 70 via the IP gateway 60.

Each IP device client 144 has access to the traffic path within the access point 50 and can be controlled by the session controller in the ZN layer 132, which can initiate and terminate calls/data sessions with the accessible IP devices. The inclusion within the access point 50 software architecture of IP device clients which are specific to a particular device or service enables traffic from that particular device or service to be routed within the access point 50, such that it can be connected to the GSM/UMTS mobile devices accessed via the GSM or UMTS Access Strata or the MNO Core Network accessed via the UMA client.

Further, each IP device client 144 has access to the other devices on the LAN, and also has access to other devices accessible over the internet 70. For example, by using the appropriate IP device client 144, a POTS phone connected to the access point 50 can be connected over the internet 70 to another POTS phone, in order to make a voice call.

Moreover, each IP device client 144 also has access to the mobile network of the MNO. Specifically, any device connected to the LAN 42, or any device connected to the IP gateway 60, can have an IP device client 144 that can associate itself with the SIM card connected to the USIM interface 84. From the point of view of the MNO network, any such device then appears to be a mobile, and will be allowed access to the MNO network. As a result, a variety of services can be provided to the user, by providing a device with appropriate desired functionality, and then using the SIM card to allow the device to connect over the MNO core network to one or more other devices.

A further use of the SIM card, connected to the USIM interface 84, is to allow the mobile phones camped onto the access point to work in a similar way to a multi-extension cordless telephone system. In this particular service configuration, the SIM card within the access point 50 carries an IMSI identifier which in fact identifies a phone line the home or office within which the access point 50 is installed, although it appears within the mobile network operator's system as a mobile number. When the IMSI of the SIM card in the access point 50 is called, all mobile phones camped onto the access point 50 are rung until one of them is answered. In this way, incoming calls to an individual person would be directed to the IMSI of that individual's mobile phone, and can therefore be differentiated from calls which are intended for any of the users in that home or office by the IMSI identifier which is called. The call handling functionality of the access point 50 then changes when the IMSI identifier of the access point itself is called.

Thus, in general terms, the access point 50 includes a UMTS SIM card which is issued by the operator whose spectrum is used by the access point, that is, the operator of the relevant mobile network. The USIM card carries standard identification information for a Mobile Terminal, most significantly an IMSI identifier and an MSISDN number which is the telephone number associated with the SIM. The IMSI identifier is used to identify the access point, authenticate it and establish secure communications with the MNO network via the IP interconnection using exactly the same mechanisms as are used for Mobile Terminals containing SIM cards which access the MNO network via IP interfaces. A number of standard interfaces are defined for IP connection of terminal devices into a MNO Network, most commonly for Wireless LAN, or WiFi, devices where the UMA and WLAN/IMS standard interfaces predominate. (So called "Pre-IMS" systems which supported IP devices including SIM cards can also be interfaced to using this principle.) Procedures for these interfaces are described in more detail below but the principle extends to any interface designed to support a remote device containing a SIM into an MNO network.

Another capability that is enabled by the inclusion of a SIM within the access point 50 is that it is possible for the access point to communicate with the MNO network as a Mobile Terminal can do. Specifically, the access point is able to make and receive calls to/from other mobile terminals or fixed line devices, to initiate and terminate data sessions with other devices and to send and receive SMS and MMS messages. This allows a number of useful functions to be supported by the access point which include:
- Reception of keyworded SMS messages from one of the users pre-registered on the access point which can instruct the access point to perform a specific function such as adding a new user to the list of "permitted users" stored within the access point (optionally the access point can update the management system 74 with this change to permitted users to maintain synchronism between databases). This capability might be combined with an application function and appropriate IP Device client within the access point so that actions can be initiated on the user's home network, such as programming a PC-based video recorder or activating a burglar alarm or heating control.
- Transmission of a SMS or MMS message to the user to alert them to important information such as a new permitted user successfully added to a access point, or a specific user becoming camped on the access point (i.e. has arrived home) or error conditions such as inability to provide service at installation due to high levels of interference. This facility could be combined with a access point application and appropriate IP Device client 144 so that activity within the user's home network can be relayed to the user when outside the home; for example a photograph of a caller at the door of the user's home taken by a security webcam could be forwarded to the user as an MMS message.
- Reception of a call/data session initiated by a user in wide area network such that the user can access information on the user's home network, for example live video from a security webcam or browsing of information stored in the users home PC server.
- Initiation of calls/data sessions so that the access point can "push" information to the user when triggered by an event or at a predetermined time. For example, with a suitable IP Device client 144 in the access point 50 and appropriate application software in the access point and home PC server, multimedia news clips downloaded onto the user's home PC can be forwarded to the user's phone, or alerts generated by stock-tracking software or internet auction sites can initiate a call to the user to invite a response to the triggering event.

Messages, calls and data sessions initiated by the access point 50 are directed into the MNO network so that they could be received by a user in the wide-area macrocell network; optionally, logic can be included in the access point to identify if the recipient of the message/call/data session is already camped on the cell so that the transaction can be initiated directly over the air interface of the access point 50 without tying up unnecessary core network resources. In a similar way, messages, calls and data sessions terminated by the access point 50 will be received direct from the core network; optionally the access point can screen outgoing transactions to identify if its own MSISDN is the intended recipient for the transaction and thereby make a decision as to whether to intercept the call to avoid unnecessary use of core network resources.

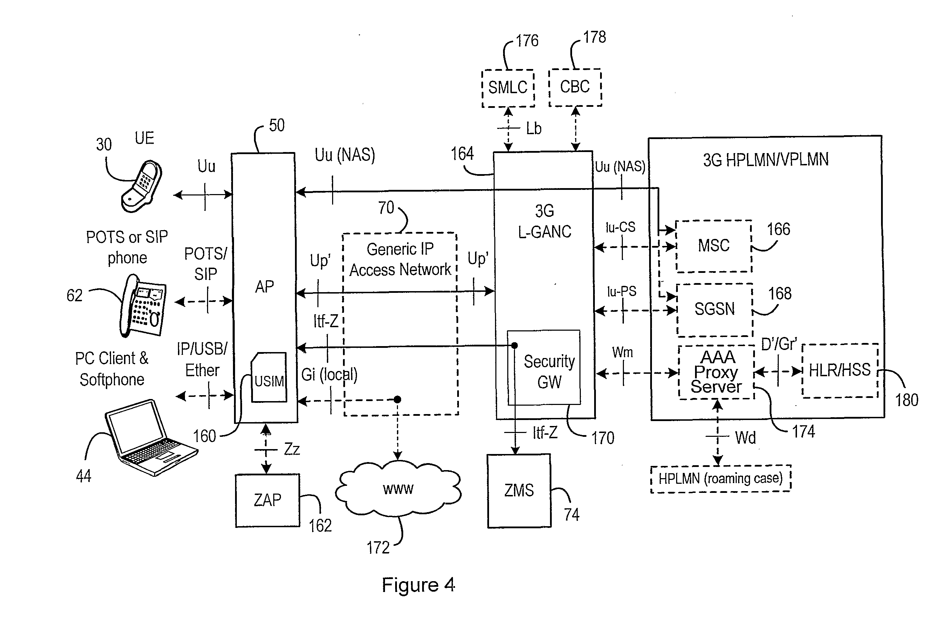

Figure 4 is a block schematic diagram of a mobile communications network, in which the access point (AP) 50 is connected into the core network using a modified version of the existing standard UMA interface to support backhaul. This is referred to herein as 3G Licensed UMA (L-UMA) or 3G L-UMA. In Figure 4, the access point (AP) 50 also includes the functionality of the IP Gateway 60 shown in Figure 1.

The UMA or 3GPP GAN standard defines an interface between the GANC controller and the UE, the Up interface. The access point 50 uses the standardised messaging to register and authenticate itsef as a Mobile device and set up a secure IPSec tunnel to the core network.

Figure 4 shows a single UE 30, although multiple UEs can camp on a single access point 50. The UEs are 3GPP standard UMTS UEs with no additional client. They can be handsets, PDAs, PC cards or any other form factor.

The POTS or SIP phone 62 is used to make home number calls via the access point 50.

The PC client 44 controls local services preferences, contacts and dynamic calls/sessions behaviour. A softphone functionality can be included in the PC client.

The access point 50 provides the following functions:-
It provides local UMTS coverage at 3GPP standards.
It includes a USIM 160 dedicated to the access point 50 provisioning, configuration, authentication with the core network and to support UMTS services for the home number service.
It interfaces with multiple UEs 30 over the 3GPP standard Uu interfaces, terminating locally AS and NAS layers.
It interfaces with local POTS or SIP phone 62 over a POTS interface or home network/Ethernet interface to a standalone VoIP (SIP) phone.
It interfaces with local PC client 44 and softphone over IP via an Ethernet interface 82. It interfaces with other local or remote access points 162 via the Itf-Zz interface.
It delivers local services without CN network signalling involvement, including local calls treatment and local Internet offload.
It interfaces with the L-GANC 164 over the Up' interface, via the Generic IP Access Network 70, for RRC-equivalent signalling and keying material exchange.
It interfaces with the CN legacy NEs (MSC 166, SGSN 168) on the 3GPP standard Uu (NAS) interface, via the Up' interface, for the NAS layers signalling (MM, CC/SS/SMS, GMM, SM).
It interfaces with the management system (ZMS) 74 over the Itf-Z interface, via the Generic IP Access Network 70 and L-GANC Security Gateway 170, for network management, services management, software upgrades, fault reporting, activity monitoring and troubleshooting. The Itf-Z is connected via the L-GANC Security Gateway 170.
It interfaces with the public data network and the Internet 172 over the Gi-L (local Gi) interface, to provide direct access to local data and local Internet offload service without core network involvement.

The Generic IP Access Network 70 provides IP connectivity between the access points 50, 162 and the L-GANCs 164 and between the access points 50, 162 and the Internet 172. The Generic IP Access Network may apply NAT/PAT, and is generally conventional.

The 3G L-GANC 164 is the UMTS Licensed Generic Access Network Controller. The L-GANC 164 provides the following functions:-
It provides functionality equivalent to that of the RNC in the UMTS architecture.
It provides secure access over the Generic IP Access Network 70 to the core network. It includes a standard Security Gateway 170 for authentication and IPsec tunnelling.
It interfaces with the core network AAA 174 over the 3GPP standard Wm interface, for the support of authentication, authorisation and accounting procedures.
It interfaces with multiple access points 50, 162 over the Up' interface, via the Generic IP Access Network 70, for RRC-equivalent signalling and keying material exchange.
It provides a secure transport for the Itf-Z between the access point 50 and the ZMS 74.
It interfaces with the core network MSC 166 over the 3GPP standard lu-CS interface, for the support of circuit switched services.
It interfaces with the core network SGSN 168 over the 3GPP standard lu-PS interface, for the support of packet switched services.
It provides a secure transport for the 3GPP standards Uu (NAS) interface between the access point 50 and the core network MSC 166 and SGSN 168.
It interfaces with the core network SMLC 176 over the 3GPP standards Lb interface, for the support of location information for the UEs roaming in the access point network It interfaces with the core network CBC 178 over the 3GPP standards CBC-RNC interface for supporting cell broadcast services.

The management system (ZMS) 74 provides OAM&P function for the access point 50. More specifically:
It manages the access point 50 using the procedures and methods described in the DSL Forum TR-069 specifications.
It is responsible for the provisioning of the access point 50 during the installation process.
It monitors for faults reported by the managed access points.
It provides a means for the operator to manage the configuration of each access point 50.
It provides user interface with security to restrict the functions to which the user has access.
It interfaces with the access point 50 over the Itf-Z using a secure IP connection.
It provides the means to manage the upgrade of the software for the access points.
It collects the performance metrics reported by the access points.
It interfaces Customer Care, and network operations centre.

The UMTS core network elements MSC 166, SGSN 168, AAA 174, and HLR/HSS 180 are 3GPP standards elements, and will not be described further.

The access point 50 uses standard UE mechanisms to authenticate itself. This is illustrated using the IMS/SIP case as an example. The 3GPP IMS standard includes a definition for an interface to support Wireless LAN UEs containing SIM cards, referred to here as the WLAN/IMS interface. As the access point 50 includes a SIM card 160, it can appear as a Wireless LAN UE containing a SIM card, so that this mechanism can be reused to authenticate the access point 50 with the MNO core network. Very similar mechanisms are included in non-standard so-called "Pre-IMS" solutions many of which are expressly designed to support incorporation of Wireless LAN devices within a conventional 3GPP network.

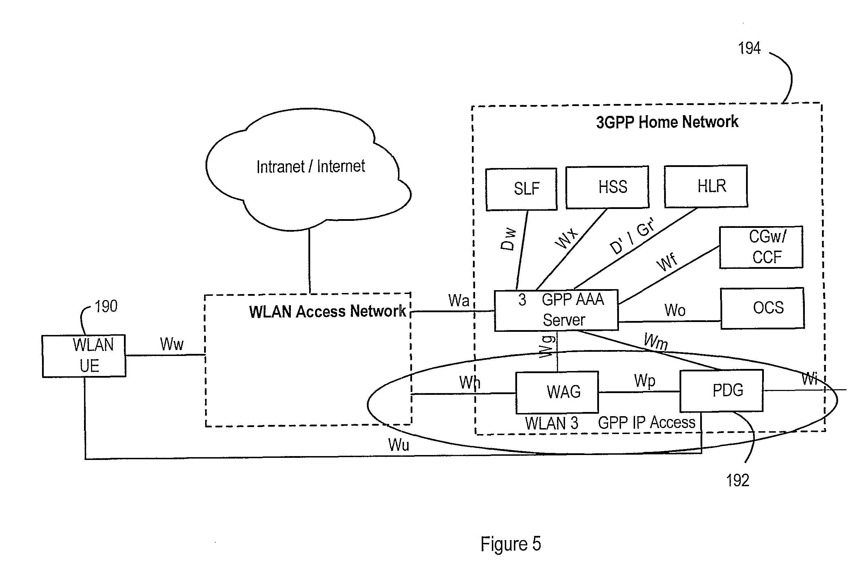

Thus, Figure 5 is a diagram illustrating the standard WLAN/IMS interface, whereby a WLAN UE 190 authenticates itself with the Packet Data Gateway (PDG) 192 in a 3GPP network 194.

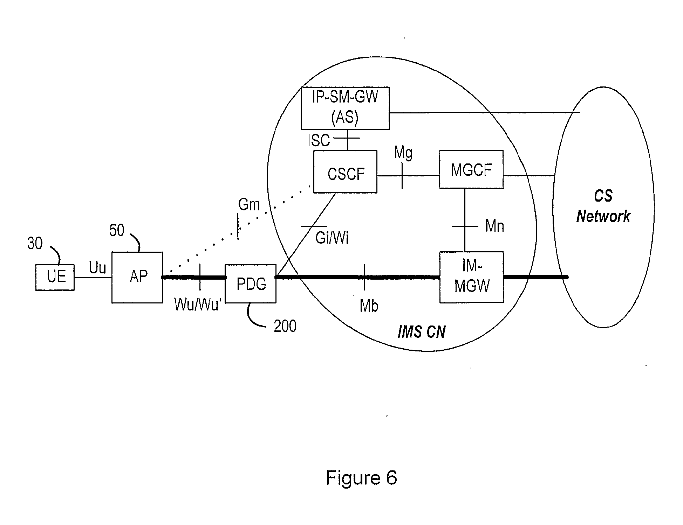

Figure 6 is a diagram illustrating the adapted version of the authentication mechanism used here. In essence the access point 50 uses the same authentication mechanisms as are specified in the 3GPP standards to authenticate itself with the AAA server and create a secure IPSec tunnel terminated at the Packet Data Gateway (PDG) 200.

The access point establishes an IPsec tunnel, specific to itself, to the Home Network. Thus, after the access point 50 is initialised it acquires a local IP address from the ISP associated with the DSL access. The access point 50 then needs a secure dedicated IP connection to the Home Network for several purposes, such as remote configuration, providing VoIP support for a POTS phone, and secure delivery of UE-specific keying material when setting up a UE-specific IPsec tunnel on behalf of each UE that attaches to the access point. This is achieved by setting up a VPN-like IPsec ESP tunnel towards the PDG 200 in the Home Network.

The access point leverages the fact that it contains a Home MNO Network provisioned USIM to establish this tunnel using IKEv2 with EAP/AKA authentication in exactly the same way as a WLAN UE would in accordance with R6 TS 23.234.

The following steps are performed at tunnel establishment:
1. The access point obtains the IP address of the PDG 200 in the Home MNO Network.
2. The access point uses IKEv2 with EAP-AKA authentication to setup the IPsec tunnel to the PDG 200 acquiring a Remote IP address in the process.

The access point is locally configured with a Fully Qualified Domain Name (FQDN) pointing to the PDG 200, in similar fashion to a W-APN in the WLAN 3GPP interworking framework. The access point 50 resolves the IP address of the PDG 200 via DNS procedures on the FQDN. It is assumed that, as in the case of WLAN 3GPP interworking, the FQDN of the PDG 200 exists in the public DNS.

The access point uses an IMSI-based Network Access Identifier, NAI, to identify itself towards the Home MNO Network, e.g.
0.<IMSI_ZAP>@.zap.mnc<MNC>.mcc<MCC>.3gppnetwork.org or
IMSI_ZAP@.zap.home_network_domain.

Where:
IMSI_ZAP is the IMSI of the USIM located in the access point
MNC is the Home MNO Network Mobile Network Code and MCC is the Mobile Country Code
The prefix 0 can be used to indicated that AKA instead of SIM authentication is requested

For the IKE-based tunnel setup procedure the access point will leverage IKEv2's native NAT transversal support, namely IETF RFC 3948 "UDP Encapsulation of IPsec ESP Packets", to deal with the (likely) fact that the access point is located behind a NAT device.

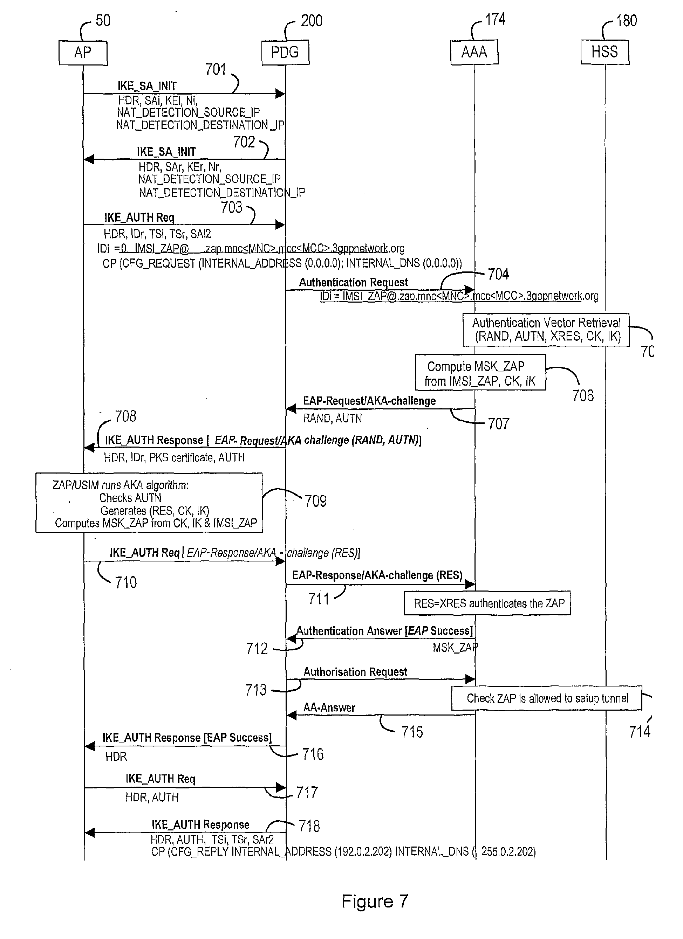

Figure 7 shows the signalling involved in setting the IPsec tunnel between the access point 50 and the PDG 200 in the Home MNO Network. This assumes a Home MNO Network architecture similar to that considered for 3GPP-WLAN interworking. However, the solution does not strictly depend on the assumptions regarding network architecture, it suffices that the architecture supports the access point to PDG signalling as described below. Although the tunnel establishment procedure between the access point/USIM and the Home MNO Network is exactly as per R6 TS 23.234, it is described here in some detail so that the changes that are required (for delivery of UE-specific keying material to the access point) when the access point establishes UE-specific tunnels on behalf of each UE can be described.

After the access point has resolved the PDG's FQDN into an IP address it initiates the tunnel establishment procedure.

At step 701, the access point 50 sends the IKE_SA_INIT message from its UDP port 500 to the UDP port 500 in the PDG 200. This message initiates the setup of the IKE SA between access point and PDG and it contains:
an SAI payload carrying the supported cryptographic suite(s), e.g. suite #2 in TS 33.234:
   Encryption: AES with fixed key length in CBC mode;
   Integrity: AES-XCBC-MAC-96;
   Pseudo-random function: AES-XCBC-PRF-128;
   Diffie-Hellman group 2
the access point's Diffie-Hellman (DH) public key, Kei, and a nonce Ni;
the NAT_DETECTION_SOURCE_IP payload carrying the hash of the source IP address (the access point's local IP address) and source port (500);
an NAT_DETECTION_DESTINATION_IP payload carrying the hash of the destination IP address (the PDG's IP address) and destination port (500).

At step 702, the PDG 200receives the IKE_SA_INIT message and proceeds to compute the hash of the source IP address and source port number of the packet carrying it. If it differs from the value in the NAT_DETECTION_DESTINATION_IP payload then the PDG knows that the access point is behind a NAT. The PDG also computes the hash of its IP address and port with that in the NAT_DETECTION_ DESTINATION_IP payload. If this differs then the PDG knows that it is itself behind a NAT and in this case it should start sending keep-alive packets to keep the NAT bindings unchanged. The PDG generates its own NAT_DETECTION_SOURCE_IP and NAT_DETECTION_DESTINATION_IP payloads in the same way as the access point did, in order to allow the access point to determine whether it and/or the PDG are behind NATs.

The PDG uses the received KEi and Ni together with its private DH key and its own generated nonce Nr to generate seven secret shared keys:
SK_ai/SK_ar, to be used by the integrity protection algorithm (AES-XCBC-MAC-96) to protect the IKE signalling
SK_ei/SK_er, to be used by the encryption algorithm (AES in CBC mode) to protect the IKE signalling
SK_d, SK_pi/SK_pr

The PDG completes the negotiation of the IKE SA by sending the IKE_SA_INIT response. This is sent (from port 500 to port 500) to the source IP address in the IP packet carrying the IKE_SA_INIT so as to make sure it travels back to the access point irrespective of the presence of NATs. This contains:
SAi payload carrying the access point-proposed cryptographic suite thus acknowledging its acceptance
The PDG's Diffie-Hellman (DH) public key, KEr, and nonce Nr
The NAT_DETECTION_SOURCE_IP payload carrying the hash of the source IP address (PDG's local IP address) and source port (500)
NAT_DETECTION_DESTINATION_IP payload carrying the hash of the destination IP address (access point's IP address) and destination port (500)

At step 703, when the access point receives the IKE_SA_INIT response it checks the NAT_DETECTION_SOURCE_IP and NAT_DETECTION_DESTINATION_IP payloads in the same way as the PDG did to detect whether or not it and/or the PDG are behind NATs. If a NAT is detected then the access point will switch to sending all future IKE signalling from port 4500 to port 4500.

The PDG uses the received KEr and Nr together with its private DH key and its own generated nonce Ni to generate the same seven secret shared keys: as the PDG did before and starts protecting all future IKE signalling with SK_ai/SK_ar and SK_ei/SK_er.

At this point the IKE SA has been setup and the access point and PDG can communicate securely but there has been no authentication. This is started by the access point by sending the first IKE_AUTH Request message. The access point asserts its IMSI-derived identity through the IDi payload. It also declares its intention to use EAP for its authentication instead of the default IKEv2 authentication methods (pre-shared secret key-based or certificate-based) by not including an AUTH payload generated though one of these two methods.

The IKE_AUTH Request message also initiates the setup of the IPsec ESP SA (CHILD_SA) that will protect all the traffic to be carried over the tunnel. The message contains:
IDi payload with the access point's identity
IMSI_ZAP@.zap.mnc<MNC>.mcc<MCC>.3gppnetwork.org
IDr payload with the PDG FQDN
CP payload requiring a remote IP address at the PDG (to terminate the IPsec tunnel) and potentially the IP address of DNS servers located inside the Home MNO Network (e.g. for P-CSCF discovery)
SAi2 which the initiator's (i.e. the access point's) Security Association payload containing the cryptographic suite(s) supported for protection of the traffic carried in the tunnel (i.e through the IPsec ESP SAs), e.g. suite #2 in TS 33.234:
   Encryption: AES with 128-bit keys in CBC mode.
   Integrity: AES-XCBC-MAC-96;
   Tunnel mode
   TSi, TSr contain the proposed traffic selectors identifying the IP flows (source range -destination range) to be carried over the tunnel.

At step 704, the PDG asks the AAA server to authenticate the access point by sending an EAP-Authentication Request message containing the asserted identity IMSI_ZAP@.zap.mnc<MNC>.mcc<MCC>.3gppnetwork.org

At step 705, if the AAA does not have a valid AKA authentication vector (RAND, AUTN, RES, CK, IK), it communicates with the HSS to obtain one. The HSS will run the AKA algorithm for the IMSI_ZAP for authentication vector generation.

At step 706, the AAA server uses CK and IK to generate a Master Session Key for that IMSI, (MSK_ZAP) and additional keys (TEKs) for protecting the EAP-AKA packets

At step 707, the AAA server uses the AUTN and RAND in the vector to authenticate itself and challenge the access point to AKA-authenticate itself by sending an EAP-Request/AKA-Challenge message carrying (RAND, AUTN) to the access point via the PDG. It also carries a MAC to allow the access point to be sure that the EAP packet was not tampered with on the way.

At step 708, the PDG forwards the EAP-Request/AKA-Challenge (RAND, AUTN, MAC) to the access point inside the IKE_AUTH Response message and includes a certificate to authenticate itself towards the access point (in addition to the EAP-AKA based authentication to take place in step 718).

At step 709, the access point uses its USIM to run the AKA algorithm i.e it:
Computes MAC to check that EAP message was not tampered with
Checks AUTN validity
Generates (RES, CK, IK)

In addition the access point computes MSK_ZAP point from CK, IK & IMSI_ZAP.

At step 710, the access point authenticates itself by sending the RES value in the EAP-Request/AKA-Challenge encapsulated in a new IKE_AUTH Request message. It may also check the validity of the PDG's certificate.

At step 711, the PDG forwards the EAP-Request/AKA-Challenge (RES) to the AAA server, which compares it with the RES value received from the HSS to authenticate the access point.

At step 712, if the authentication is successful then the AAA server forwards the MSK_ZAP to the PDG in a EAP-Success payload encapsulated on the successful Authentication Answer.

At step 713, the PDG asks the AAA server to authorize the access point to enjoy the services associated with its FQDN (W-APN like).

At step 714, the AAA server checks the profile associated with the IMSI_ZAP to determine whether the tunnel can be set up.

At step 715, the AAA server confirms authorisation for tunnel setup.

At step 716, the PDG informs the access point that the authentication with the AAA server was successful by sending the EAP-Success payload in the IKE_AUTH Response.

At step 717, the access point authenticates itself towards the PDG by signing the IKE_SA_INIT message of step 701 with the MSK_ZAP key and including the result in the AUTH payload of a new IKE_AUTH Request message.

At step 718, the PDG uses its knowledge of MSK_ZAP point to check the AUTH payload thus authenticating the access point. Then the PDG uses the MSK_ZAP to generate its own AUTH payload by signing the IKE_SA_INIT response of step 702 so as to authenticate its identity towards the access point. The PDG sends this in the IKE_AUTH Response message. In addition the PDG sends the assigned Remote IP address of the tunnel in the configuration payload (CFG_REPLY), and the negotiated cryptographic suite (the same as the proposed one), SAr2 and traffic selectors TSi, TSr, thus completing the negotiation of the IPsec ESP SAs that will protect all the traffic in the tunnel. Finally, the access point uses its knowledge of MSK_ZAP to check the AUTH payload thus authenticating the PDG.

The access point 50 includes client software functions for the UMA and WLAN/IMS interfaces (client software specific to particular non-standard Pre-IMS solutions can also be included within the access point). The client functions allow the access point to appear to the MNO Network as a Terminal device as described above, but they also include interworking functions to allow a standard GSM/UMTS terminal which is camped onto the access point 50 to appear as a UMA device or as a WLAN UE to the UMA or IMS interfaces respectively. (Again, the same principle can be extended to proprietary Pre-IMS solutions based around SIP, which have a high degree of commonality with SIP/IMS approaches). SIP and UMA clients developed for Mobile devices can be used as the basis of these client functions - the great benefit to a mobile operator is that the clients which enable access over an IP network are supported in the access point 50 and not in the phone, so that legacy phones can continue to be used with an IP-based access network reducing the operator's investment and improving services for customers.

The air interface from the access point 50 to the Mobile Terminal should be ciphered using standard GSM/UMTS procedures. To enable ciphering, the access point 50 needs access to cipher key information distributed from the MNO core network directly to the UE. To facilitate access to the cipher key information, small modifications have been made to the standard mechanisms to allow the access point to use UE identification to access the keys normally provided only to the UE. This process is initiated only after the access point 50 has been authenticated by the core network so that it is a "trusted element". Furthermore, the keys obtained are temporary keys which must be refreshed for each call - master keys are not exchanged with the access point.

The implementation of this interworking principle for the UMA and SIP/IMS interfaces is described in more detail below.

One use of an interworking function is to support UE access and cipher key exchange using UMA. As described above, the access point 50 connects to the core network over a generic IP access network. There are two options for this connection, and the mobile network operators must be able to choose at the time of deployment between:
Secure IP access, where secure IPsec tunnels are applied for all access point to core network communication, including access point specific IPsec tunnels and UE specific IPsec tunnels; and
Private IP access, where the MNO owns or has direct control of the IP access network, which is not going through any public PDNs, and, in this case, the MNO may want not to have the IPsec management and overheads and may rely instead on the intrinsic security of the private IP access.

If the MNO requires secure IP access of the generic IP access network, the following applies. At power-on, the access point sets-up an IPsec tunnel with the SeGW, using USIM-based authentication. The access point IPsec tunnel is used to:
Support access point signalling and Network Management functions;
Support the home number service, for non-UE calls (like POTS) and fixed-line replacement

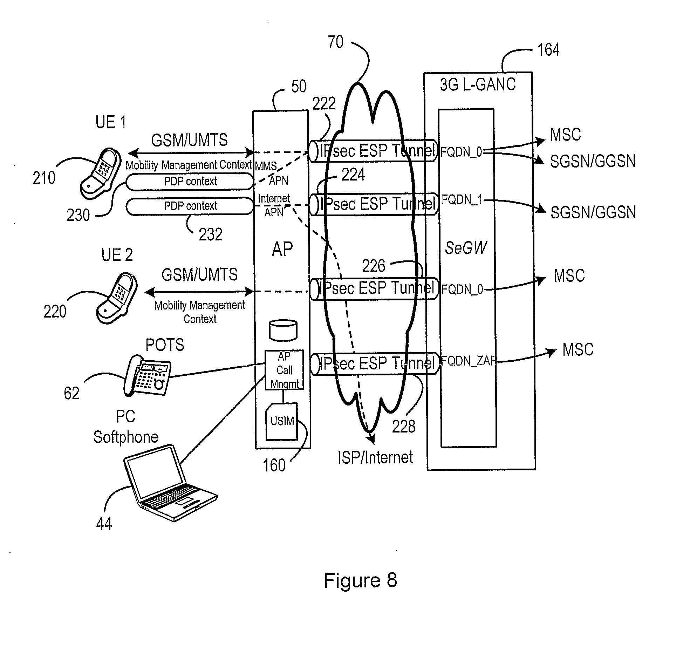

For each UE that roves-in the access point coverage, the access point sets-up the UE-specific IPsec tunnel(s) with the SeGW, with USIM-based authentication (with the access point as the proxy). Figure 8 shows an example, showing the relevant part of the system of Figure 4, where there are a first UE (UE1) 210, and a second UE (UE2) 220. In this case, UE 1 is a UE that offers CS services, connected with a high-QoS PDP context 230 to the MNO data services (e.g. MMS), and connected with a best-effort PDP context 232 to the Internet via the GGSN, while UE 2 is a CS-only UE, e.g. a UE for which the end-user has not activated data connectivity.

In this example, the access point 50 sets up a respective tunnel for each of the two UEs, namely a first tunnel 222 for the first UE 210, and a second tunnel 224 for the second UE 220. These tunnels carry the CS traffic and optionally the first PDP context. In this example, the access point 50 also sets up additional IPsec tunnels 226, 228 with the SeGW, for example for QoS differentiation of multiple/secondary PDP contexts.

The access point 50 also instantiates a UE NAS and L-UMA client for CN signalling, transparently to the legacy UE. Optionally, the access point supports local Internet offload.

In other examples, there may be one tunnel per access point and one tunnel per UE, or one tunnel per access point grooming all traffic (QoS differentiation on outer IP header), or no IPsec tunnels, but PPP or equivalent from the access point to the core network.

The high-level security architecture is specified in the following.

### IP networking Security

There is a firewall at the home router. Also, in the case of the Secure IP access option, but not the Private IP access option, all communications are secured via IPsec tunnels between the access point and the CN Security GW, and there is one IPsec tunnel per access point and at least one per UE, all with USIM-based authentication.

### Access point-level security

The access point authenticates with the management system 74 for service; the access point registers with L-GANC, and the access point authenticates with CN MSC/SGSN for call/data services, using USIM-based MM-layer authentication. Also, in the case of the Secure IP access option, but not the Private IP access option, the access point authenticates with the CN Security GW and sets up a USIM-based IPsec tunnel.

### UE-level security

Each UE is screened for access locally by the access point (by IMSI), the UE registers with L-GANC, the UE authenticates with CN MSC/SGSN for call/data services, with the access point acting as a proxy, using USIM-based MM-layer authentication with MSC/SGSN, and there is ciphering on the radio interface between the UE and the access point, using IK, CK captured during MM authentication procedure. The MSC sends these to the L-GANC in the RANAP Security Mode Command, and the L-GANC forwards them to the access point on extensions of current GA-CSR (URR) messages or on a new dedicated message. Also, in the case of the Secure IP access option, but not the Private IP access option, the initial UE signalling with the core network may be carried over access point-specific IPsec tunnels, and the UE authenticates with the core network Security GW, with the access point (based on the USIM) acting as a proxy and setting up a UE-specific IPsec tunnel and optionally setting up additional IPsec tunnels for secondary/multiple PDP context establishment, for QoS differentiation, unless only one IPsec tunnel per access point is used.

In the case of an access point IPsec tunnel establishment, when the Secure IP access option is used, the IPsec tunnel for the access point uses a USIM-based authentication. No changes are required to the standard IKEv2 and EAP-AKA procedure.

The access point IPsec tunnel establishment is followed by the access point registration with the L-GANC, according to the standard procedure, and the access point MM authentication, again according to the standard procedure.

In the case of the Secure IP access option, and provided there is not just a single IPsec tunnel per access point, a UE IPsec tunnel is established. No radio ciphering is started at this stage, and the procedure must be UE USIM-based.

After and IPsec tunnel has been set up, the access point L-UMA client registers the UE with the L-GANC following the standard procedure.

The radio ciphering is synchronised with the MM LAU procedure with the MSC. The ciphering keys (IK, CK) are stored in the access point at this stage, using the ciphering material that the MSC has sent to the L-GANC in the luCS RANAP Security Mode Command. The L-GANC forwards them to the access point on extensions of current GA-CSR (URR) messages or on a new dedicated message.

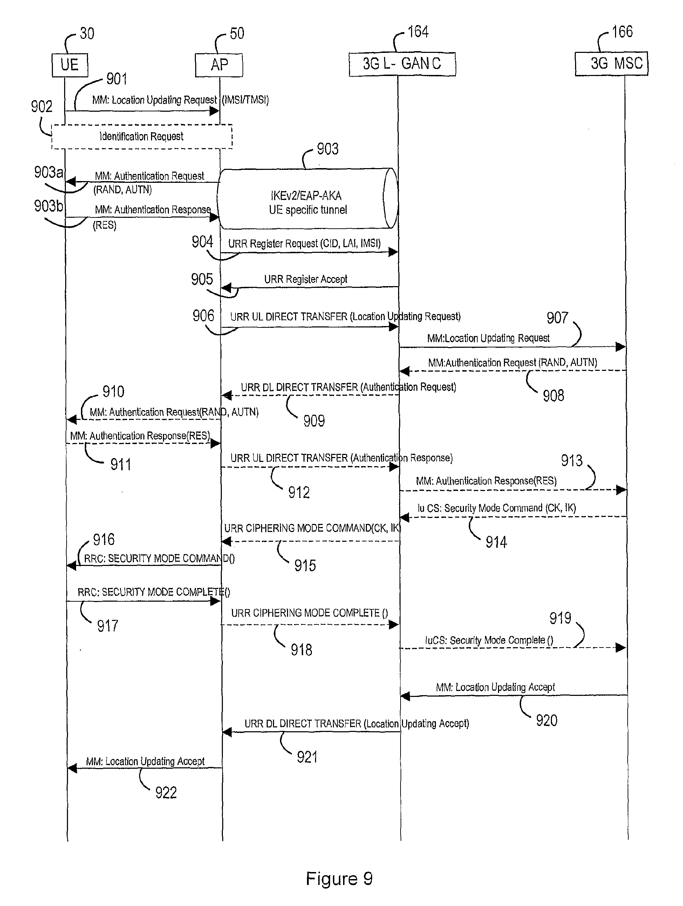

Figure 9 illustrates in detail the procedure for performing an MM Location Area Update and ciphering, in the case of a circuit-switched registration, where authentication and ciphering is enabled in the MSC.

In step 901, the UE 30 may perform a PLMN and/or cell selection /reselection in idle mode by sending a LOCATION UPDATING REQUEST message to the access point 50. The message may contain the UE's IMSI or TMSI.

In step 902, the identification procedure may be initiated by the access point in order to obtain the IMSI from the UE if only a TMSI was received in the LOCATION UPDATING REQUEST message.

Step 903 is applicable only to the Secure IP access option (and not applicable to the single IPsec tunnel per access point option), otherwise the procedure continues directly with step 904. The IKEv2 and EAP-AKA procedures are performed in order to set up the secure IPsec tunnel between the access point and the UNC. During EAP-AKA the Authentication and Security procedures will be performed. In this case, the SECURITY MODE messages are sent to the UE during the EAP-AKA procedure.

In step 904, on successful establishment of the IPsec tunnel, the access point generates and sends the URR REGISTER REQUEST message to the UNC in order to register the UE on to the UNC. We assume that the serving UNC has already been discovered by the access point and, in step 905, the URR REGISTER ACCEPT message is received from the UNC indicating that the UE has successfully registered onto the UNC.

In step 906, the original LOCATION UPDATING REQUEST message received from the UE is transferred to the UNC in the URR UL DIRECT TRANSFER wrapper and, in step 907, the UNC transfers the LOCATION UPDATING REQUEST to the MM sublayer in the MSC.

Assuming that authentication and ciphering are enabled in the 3G MSC, then, in step 908, the MM sub-layer generates the AUTHENTICATION REQUEST message containing the 3G RAND and AUTN parameters and, in step 909, the UNC generates and sends the URR DL DIRECT TRANSFER message containing the AUTHENTICATION REQUEST to the access point.

In step 910, the access point receives the URR DL DIRECT TRANSFER and sends the AUTHENTICATION REQUEST message to the UE.

In step 911, the UE performs the 3G authentication procedure, and generates the RES, which is sent to the access point in the AUTHENTICATION RESPONSE message. In step 912, the access point sends the AUTHENTICATION RESPONSE message in the URR UL DIRECT TRANSFER to the UNC and, in step 913, the UNC receives the URR UL DIRECT TRANSFER and sends the AUTHENTICATION RESPONSE message to the MSC.

In step 914, the RES contained in the AUTHENTICATION RESPONSE is validated in the MSC. The ciphering is enabled by sending the Security Mode command to the UNC, which should contain the CK and IK Ciphering and Integrity keys. In step 915, the UNC sends the ciphering and integrity information in a modified URR CIPHERING MODE COMMAND (or a new message URR SECUIRTY MODE COMMAND) to the access point.

In response, in step 916, the access point generates the SECURITY MODE COMMAND message containing the UEA (ciphering algorithm), UIA (integrity algorithm), FRESH and MAC-I information. Note that the UEA, UIA, FRESH, and MAC-I could be sourced from the access point.

In step 917, the SECURITY MODE COMPLETE message is sent from the UE to the access point and, in step 918, the access point generates the modified URR CIPHERING MODE COMPLETE message (or new URR SECURITY MODE COMPLETE message). In step 919, the UNC sends the CIPHER MODE COMPLETE message to the MSC.

In step 920, the MSC sends the LOCATION UPDATING ACCEPT message to the UNC and, in step 921, the UNC sends the URR DL DIRECT TRANSFER message to the access point containing the LOCATION UPDATING ACCEPT and, in step 922, the access point sends the LOCATION UPDATING ACCEPT to the UE to complete the registration procedure.

Thus, the L-GANC 164 forwards the ciphering keys to the access point 50 for the radio encryption. The luCS messages are the standard ones, the L-UMA messages are evolutions of the standard UMA ones.

As an alternative to the above, or in addition, an interworking function can be provided within the access point to support UE access and cipher key exchange using the 3GPP WLAN/IMS interface. The access point-SIP framework re-uses those aspects of the 3GPP-WLAN interworking framework that are valid for a generic IP access to 3GPP services and are not WLAN access specific.

The fundamental concepts which are re-used are:
the use of an IKEv2-generated IPsec ESP tunnel as the IP connectivity bearer to an access/security gateway in the Home MNO Network, (in similar fashion as the PDP context when the access NW is GPRS); and
the use of EAP-AKA/SIM based mutual authentication of the IPsec tunnels.

For simplicity, the term PDG is re-used to denote the access/security gateway in the Home MNO Network that terminates the tunnels, but of course the gateway functionality does not have to be strictly the same as that of 3GPP-WLAN PDG.

The access point will establish two kinds of IPsec tunnels to the PDG: one access point-specific tunnel (to handle all access point-related signalling) and one or more UE-specific tunnels for each UE that is GSM/UMTS attached to the access point. Thus the illustrated access point-SIP solution relies on the access point creating UE-specific IPsec tunnels on behalf of the UE through which all UE-related traffic is exchanged with the Home MNO Network, such that the UE has seamless access to the usual 3GPP CS and PS based services when it is GSM/UMTS attached to the access point.

The key issue to be handled in the establishment of these EAP AKA/SIM authenticated UE-specific tunnels is that, while the access point terminates the EAP signalling, it does not have direct access to the (U)SIM residing in the UE. While the access point can trigger the UE/(U)SIM to run the AKA/SIM algorithm by initiating a UMTS/GSM authentication procedure (thus coupling the UE-access point GSM/UMTS authentication procedure with access point-PDG tunnel authentication procedure) it will not have direct access to the keying material generated in the UE/(U)SIM when the AKA/SIM is run. As such the access point must obtain this keying material directly from the Home MNO Network. Two alternative methods are described to achieve this, and each method requires a slightly different interface structure between the access point and the Home MNO Network.

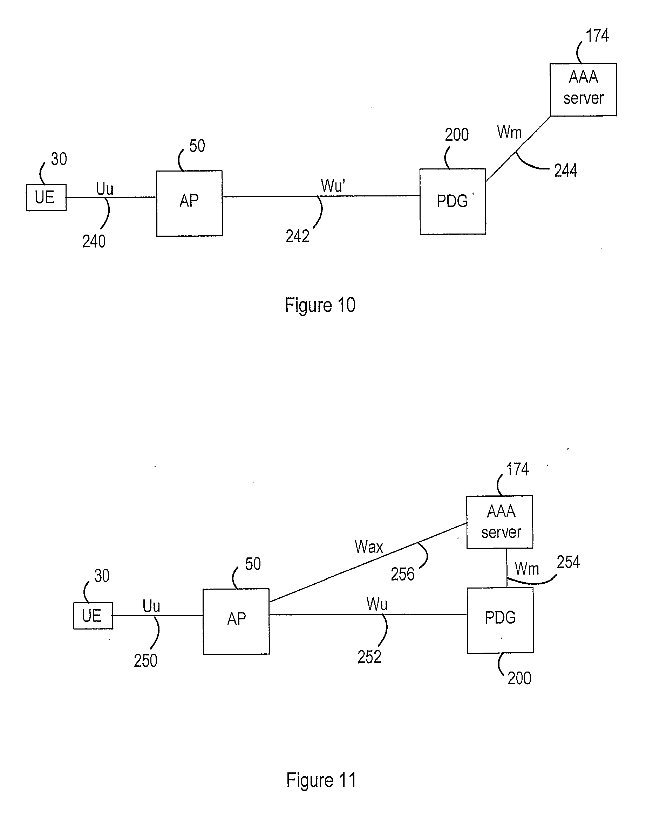

Figure 10 illustrates a first architecture, which applies to the case where the "in-band" method of obtaining the UE-specific keying material at tunnel establishment is used.

Thus, in the architecture shown in Figure 10, there is a Uu interface 240 between the UE 30 and the access point 50, a Wu' interface 242 between the access point 50 and the PDG 200, and a Wm interface 244 between the PDG 200 and the AAA server 174.

The Uu interface 240 is the usual GSM/UMTS air interface between the UE and the access point.

The Wu' interface 242 is an enhanced version of the Wu interface defined in R6 TS 23.234. When used by the access point to establish an EAP-AKA authenticated IPsec tunnel on behalf of itself (using the local access point USIM) it is indistinguishable from the standard Wu interface. However, it can also be used by the access point to establish an EAP-AKA/SIM authenticated IPsec tunnel on behalf of a UE, in which case additional functionality is supported in order to allow the access point to request the Home MNO Network to deliver the UE-specific AKA/SIM generated keying material.

This translates into defining three new proprietary attribute types for the IKEv2 CFG_REQUEST payload type, two to carry the ciphering key (CK) and Integrity Protection key (IK) in case of AKA authentication and the third one to carry the stand-alone ciphering key (Kc) in case of SIM authentication.

The Wm' interface is an enhanced version of the Wm interface defined in R6 TS 23.234. When used during the authentication and authorisation of a access point-specific tunnel it is indistinguishable from the standard Wm interface. However, when used during the authentication and authorisation of a UE-specific tunnel, additional functionality is supported in order to allow the AAA server to forward (to the PDG) the ciphering key (CK) and Integrity Protection key (IK) in the case of AKA authentication or the stand-alone ciphering key (Kc) in the case of SIM authentication.

Figure 11 illustrates a second architecture, which applies to the case where the "out-of-band" method of obtaining the UE-specific keying material at tunnel establishment is used. In this case, the access point 50 needs a direct interface to the AAA server 174 in the Home MNO Network in order to retrieve the UE-specific keying material at the time of UE-specific tunnel establishment. Thus, in the architecture shown in Figure 11, there is a Uu interface 250 between the UE 30 and the access point 50, a Wu interface 252 between the access point 50 and the PDG 200, a Wm interface 254 between the PDG 200 and the AAA server 174, and a Wax interface 256 between the access point 50 and the AAA server 174.

The Uu interface 250 is the usual GSM/UMTS air interface between the UE and the access point.

The Wu interface 252 is basically the same as the Wu interface defined in R6 TS 23.234, the only differences being regarding the format of the identities used. The NAI used as the access point identity contains a specific prefix in order to differentiate it from a WLAN UE. The NAI used as the UE identity is decorated with the identity (IMSI) of the access point, so as to make clear to the Home MNO Network that the UE is attached to that specific access point.

The Wm interface 254 is basically the same as the Wm defined in R6 TS 23.234, the only differences being regarding the format of the identities used to identify the access point and the UE attached to the access point as discussed in the previous section.

The Wax interface 256 is used by the access point to retrieve (from the AAA server) the UE-specific keying material that is generated when the AKA/SIM algorithm is run during the authentication of UE-specific tunnels. The protocol used is RADIUS or DIAMETER according to AAA server support. The Wax interface is a combination of the Wa and Wx interfaces defined in R6 TS 23.234 for 3GPP WLAN Interworking. It is akin to the Wa interface in that it connects the access network (access point) to the AAA server in the Home MNO Network via an AAA protocol. However its purpose (to retrieve Authenticating Vector material CK and IK or Kc), is similar to that of the Wx interface between the AAA server and the HSS.

The ultimate goal of the access point-SIP solution is to provide seamless support for the same services when the UE is GSM/UMTS attached to the access point-SIP as those enjoyed when GSM/UMTS attached to the Home MNO Network via the macro cellular GSM/UMTS access network.

Since the UE is not able to access the Home MNO Network's 3GPP services over a generic IP access network, the access point performs this task on behalf of the UE. For that purpose, the access point needs to establish IP bearers on behalf of the UE between itself and the Home MNO Network for carrying the UE-related traffic. The best way to achieve this is to establish VPN-like IPsec ESP tunnels on behalf of the UE in much the same way as defined for a WLAN UE in the WLAN-3GPP Interworking framework for WLAN-3GPP IP Access (scenario 3) in 3GPP R6 TS 23.234. This is because, in this way, the access point makes each UE look like a WLAN UE to the Home MNO Network and so the Home MNO Network's infrastructure for WLAN-3GPP interworking can be re-used for the access point-SIP access solution.

The tunnel management framework can be described as follows:
1. The access point will contain a database mapping GPRS APNs to PDG FQDNs on a 1-1 basis, i.e.:
   If GPRS APN x is mapped to FQDN x then FQDN x gives access to the same set of 3GPP PS based services as would be available to the UE through GPRS APN x, if it were located in the macro cellular GSM/UMTS access network.
2. During the UE-initiated GSM/UMTS attach to the access point, this establishes a default IPsec tunnel to the PDG on behalf of the UE. The authentication and key generation procedures in the UE-access point and access point-PDG interfaces are coupled together by the access point. This tunnel is established towards a default (locally configured) Fully Qualified Domain Name, FQDN-0, which identifies both the PDG and a set of services to be provided. The set of services supported by FQDN_0 includes all the 3GPP CS based services normally available to the UE when camped on the macro cellular GSM/UMTS access network ,i.e., CS voice calls, SMS etc. FQDN_0 may also support the 3GPP PS based services associated with a specific GPRS APN.
3. Subsequently, if the UE requests the activation of a PDP context towards a GPRS APN:
   I f there is no PDP context already active for that GPRS APN (Primary PDP Context Activation Procedure) then the access point checks the internal database of associations between GPRS APNs and PDG FQDNs to see if that APN is associated with FQDN_0. If that is the case then the existing IPsec tunnel is re-used. The access point assigns the Remote IP address and internal DNS server address associated with the existing tunnel to the PDP context (i.e. it sends them in the ACTIVATE PDP CONTEXT ACCEPT). If that is not the case, then the access point establishes a new tunnel towards the FQDN associated with the GPRS APN and assigns the Remote IP address and internal DNS server address associated with that new tunnel to the PDP context (i.e. it sends them in the ACTIVATE PDP CONTEXT ACCEPT)
   I f there is a PDP context already active for that GPRS APN (Secondary PDP Context Activation Procedure) then the existing tunnel is reused.

The access point automatically establishes a default UE-specific IPsec tunnel towards FQDN_0 when the UE GSM/UMTS attaches to the access point. FQDN_0 provides at a minimum access to CS-SIP interworking for 3GPP CS based services and may also provide access to the 3GPP PS based services supported for a specific GPRS APN.

The access point re-uses the IP address obtained from the resolution of the PDG's FQDN at the time of the establishment of the access point-specific tunnel. In this way, the same PDG is used to terminate all the tunnels originating from the access point, i.e both the access point specific tunnel and all UE-specific tunnels.

When the access point requests the establishment of the tunnel on behalf of the UE, the asserted identity used is composed by decorating the UE's IMSI-based NAI with the access point's IMSI. In this way, both the identity of the UE on behalf of which the tunnel is being requested and the identity of the access point making the request are clear to the Home Network. In a similar fashion to that employed in the WLAN 3GPP IP access [See 3GPP R6 TS 23.003 "Numbering, addressing and identification for 3GPP System to WLAN Interworking"], the asserted identity is also decorated with a flag that indicates whether EAP AKA or EAP SIM authentication should be used, e.g. 0<IMSI_UE>@<IMSI_ZAP>.zap.mnc<MNC>.mcc<MCC>.3gppnetwork.org for EAP-AKA, or
1<IMSI_UE>@<IMSI_ZAP>.zap.mnc<MNC>.mcc<MCC>.3gppnetwork.org for EAP-SIM.

For the IKE-based tunnel setup procedure, the access point will leverage IKEv2's native NAT transversal support to deal with the (likely) fact that the access point is located behind a NAT device. Once the IPsec ESP tunnel is setup, the access point uses IETF RFC 3948 "UDP Encapsulation of IPsec ESP Packets" to deal with the fact that the access point is located behind a NAT device.

The access point-SIP solution for setting up IPsec tunnels to the Home MNO Network on behalf of the UE relies on two inter-locked security procedures for providing end-to-end security at the access network level.

Firstly, in the case of a UE performing a UMTS attach to the access point, the access point performs mutual UMTS access authentication with the UE/USIM on behalf of the Home MNO Network (HSS/HLR), as per R99 TS 33.102 "3G Security; Security architecture", and the access point performs mutual tunnel authentication with the Home MNO Network (with both AAA server/HSS and PDG) on behalf of the UE/USIM, (as per IKEv2 using EAP-AKA).

Secondly, in the case of a UE performing a GSM attach to the access point, the access point performs GSM access authentication of the UE/SIM on behalf of the Home MNO Network (HSS/HLR), as per ETSI GSM 03.20: "Digital cellular telecommunications system (Phase 2+); Security related network functions", and the access point performs mutual tunnel authentication with the Home MNO Network (with both AAA server/HSS and PDG) on behalf of the UE/SIM, (as per IKEv2 using EAP-SIM).

In both cases the two procedures can be coupled because they both rely on running the SIM/AKA algorithms for authentication and generation of keying material for access layer encryption and integrity protection. However, the access point does not have direct access to any of the entities where the SIM/AKA algorithm is run, i.e., the (U)SIM of the UE or the HSS/HLR.

While the access point can perform mutual authentication with the AAA server in the Home MNO Network on behalf of the UE/(U)SIM by mapping the EAP Request/Response exchange to the MM: Authenticate Request/Response exchange, it still needs to obtain the keying material generated when the AKA/SIM algorithm is run, in order to perform authentication towards the PDG on behalf of the UE, as per IKEv2/EAP and in order to secure the GSM/UMTS air interface.

Considering performing authentication towards the PDG, it is generally the case that, when EAP-AKA (encapsulated in IKEv2) is used for authentication between two IKEv2 peers at (IPsec tunnel establishment), the mutual authentication is based on both peers proving to have obtained the same shared secret as a result of the EAP AKA exchange. This shared secret is the Master Session Key, MSK, which is obtained from the common CK and IK keys that were generated when the AKA algorithm was run at both ends during the EAP AKA exchange.

In the current case, the PDG receives the Master Session Key from the AAA server. However since the access point cannot itself run the AKA algorithm and has no way to obtain CK and IK from the UE/USIM itself, there must be an external way by which the access point obtains CK and IK necessary to authenticate itself towards the PDG on behalf of the UE.

The same applies in the case of EAP SIM authentication, substituting CK and IK with Kc.

Considering securing the GSM/UMTS air interface, when the UE performs UMTS registration to the access point, the access point must obtain the same set of keys (CK, IK) for the UMTS ciphering and integrity protection algorithms (between the UE and RNC) as that generated at the UE/USIM. A similar problem occurs in the case of GSM registration regarding the ciphering key, Kc.

Thus, the access point requires access to CK and IK every time the AKA algorithm is run between the UE/USIM and the HSS/HLR, and Kc every time the "SIM" algorithm is run between the UE/SIM and the HSS/HLR.

As described here, the access point obtains those keys from the Home MNO Network. The access point can obtain the keys from the Home MNO Network during the establishment of the IPsec tunnel on behalf of the UE, either "Out of band"; via the pre-existing connection between the access point and the Home MNO Network based on the USIM located in the access point itself, or "In band", by piggybacking on the EAP signalling used to set up the tunnel on behalf of the UE.

In any of the solutions it is critical that these keys are transported securely. This can be achieved by relying on the fact that there is a pre-shared secret between the access point and the Home MNO Network, i.e., the MSK_ZAP which was generated at both ends when the access point previously setup the IPsec tunnel with the Home MNO Network, based on its own USIM.

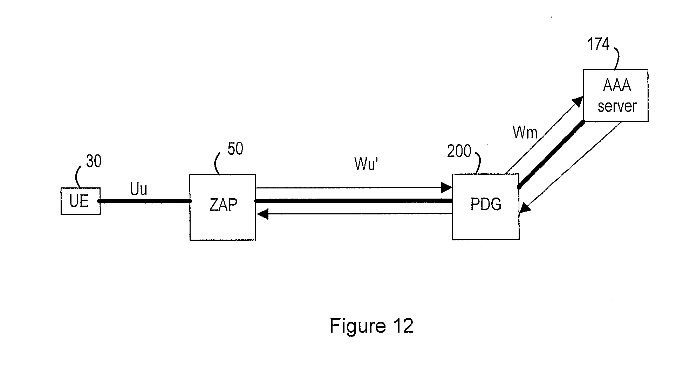

Figure 12 illustrates the "In band" solution, where the keys are sent from the AAA server in the Home MNO Network to the access point (via the gateway) during the signalling to set up the UE-related IPsec tunnel itself. This requires some modification to the payloads of the IKEv2/EAP exchanges from those defined for the Wu and Wm interfaces in TS 23.234, in order to carry the keys.

The keys can be securely transmitted between the PDG and the access point because there is a pre-shared secret between them, MSK_ZAP, generated at the time the pre-existing IPsec tunnel was established between the access point/USIM and the Home MNO Network.

When the access point requests the establishment of an IPsec tunnel on behalf of the UE it asserts its identity as
0<IMSI_UE>@<IMSI_ZAP>.zap.mnc<MNC>.mcc<MCC>.3gppnetwork.org in the case of a UMTS attach, or
1<IMSI_UE>@<IMSI_ZAP>.zap.mnc<MNC>.mcc<MCC>.3gppnetwork.org in the case of a GSM attach.

In the case of a GSM attach, the access point requests the PDG to deliver the UE-specific ciphering key, Kc, by including an additional (proprietary) attribute, Kc_AT, in the CFG_REQUEST payload of the initial IKE_AUTH Req message.

In the case of a UMTS attach, the access point requests the PDG to deliver the UE-specific ciphering and integrity keys (CK, IK), by including two additional (proprietary) attributes CK_AT and IK_AT, in the CFG_REQUEST payload of the initial IKE_AUTH Req message.

The PDG then sends the Authentication request to the AAA server, quoting the identity received in the IDi payload (and the FQDN_0 which identifies the access point for CS-SIP interworking).

From the fact that the IDi payload contains an IMSI (UE) decorated with another IMSI (access point) the AAA server becomes aware that this is request for a UE-specific tunnel and not an access point-specific tunnel. As such, it knows that it must send the UE-specific keying material to the PDG in addition to the "usual" UE-specific MSK. Assuming that the AAA protocol used between the PDG and the AAA server is DIAMETER (as required by 3GPP WLAN interworking) then, in the case of AKA authentication, the AAA server may use the: "Confidentiality Key AKA" AVP and "Integrity Key AKA" AVP.

In the case of SIM authentication, the AAA server may use the "Confidentiality Key AKA" AVP.

From the fact that the IDi payload associates the IMSI of the UE with the IMSI of the access point, the PDG knows to retrieve the MSK_ZAP key, which it shares with the access point from the time of the establishment of the access point-specific tunnel, to encrypt the UE-specific keying material received from the AAA server.

The PDG includes this material in the CFG_REPLY payload of the IKE_AUTH Response that carries the EAP Success payload.

Since the access point also knows MSK_ZAP, it can decrypt the payload(s) and access the UE-specific keying material.

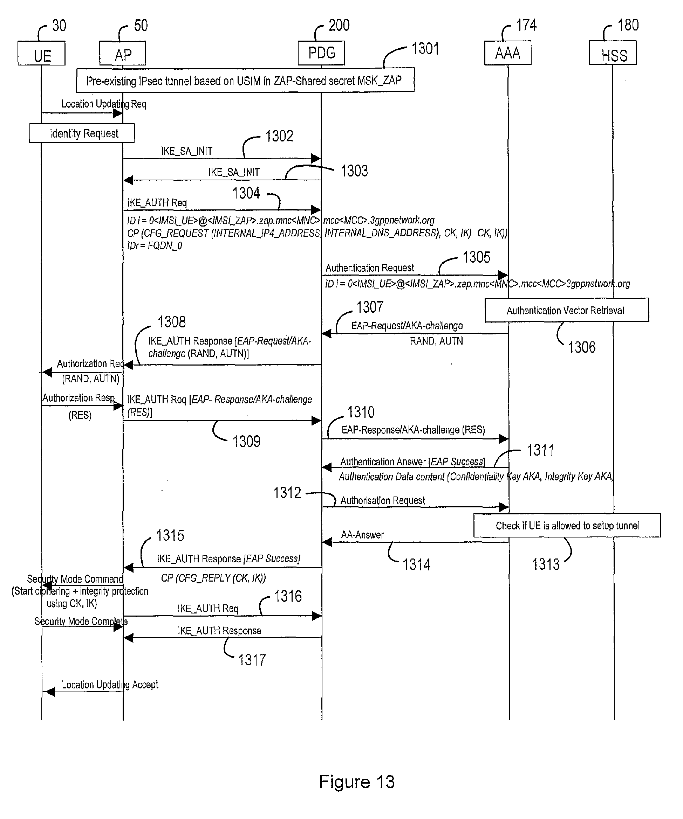

Figure 13 shows the IPsec tunnel establishment signalling needed in order to allow for the transport of the UE/USIM-related keys (CK, IK) to the access point in case of EAP-AKA authentication. This is based on the standard IPsec tunnel establishment signalling (TS 23.234). A similar mechanism applies to EAP-SIM authentication.

Specifically, Figure 13 shows how CK and IK can be carried from the Home MNO Network to the access point at the time the UE-related IPsec tunnel is being established by the access point (on behalf of the UE). In step 1301, as described above, every time the access point is powered on it establishes an IPsec tunnel to a PDG in the Home MNO Network. This procedure exactly follows the procedures defined in R6 TS 23.234 section 6.1.5 "Mechanisms for the setup of UE-initiated tunnels (WLAN 3GPP IP access)". As a consequence of this procedure, the access point, the PDG and the AAA server all share a secret key, the MSK_ZAP.

In steps 1302 and 1303, the access point and the PDG establish a new IKE_SA and agree on the IPsec protocols/algorithms used to secure the IKE signalling used to setup the UE-related IPsec tunnel.

The IKEv2 protocol provides a generic mechanism for one of the IKE peers to request the other peer for configuration information. This consists in including a CFG_REQUEST payload in an IKE request listing the requested attribute. IKEv2 defines several default attributes, including INTERNAL_IP4_ADDRESS, which is already used to obtain a remote IP address in the PDG necessary for the establishment of the IPsec tunnel. However IKEv2 allows the extension to new proprietary attribute types. In this solution, we define two additional attributes CK_AT and IK_AT to be used by the access point in step 1304 to request the PDG to supply the necessary CK and IK associated with the UE. Additionally, in order to allow the Home MNO Network to understand that this tunnel establishment procedure is associated with this specific access point, the access point decorates the UE's NAI with its own IMSI, i.e,
0<IMSI_UE>@<IMSI_ZAP>.zap.mnc<MNC>.mcc<MCC>.3gppnetwork.org.

Thus, if the IMSI of the USIM in the access point is 234150999999999 and the IMSI of the UE's USIM is 234150888888888, then the access point asserts the following identity on behalf of the UE:
IDi=0234150888888888@234150999999999.zap.mnc234.mcc15.3gppnetwork.org

Following the 3GPP-WLAN convention (R6 TS 23.003), the 0 prefix signals that EAP_AKA is to be used. A prefix 1 would signal EAP-SIM.

Since IDi contains the access point's IMSI the PDG can retrieve the pre-shared secret between the access point and the GW, i.e., MSK_ZAP and thus use it to encrypt the UE-related CK and IK when these are received from the AAA server later in the signaling.

In step 1306, the AAA server checks whether it has a stored AKA authentication vector (RAND, AUTN, XRES, CK, IK) associated with the UE's IMSI. If not, it queries the HSS for new ones.

When the AAA server reads this special form of IDi it knows that for this case it must send the CK and IK associated with the UE's IMSI to the PDG so that is eventually sent to the access point. This in addition to the MSK_UE that is generated by the AAA as usual from the CK and IK.

In step 1308, the access point maps the EAP-Request/AKA-challenge (RAND, MAC, AUTN) into MM: Authenticate Request (RAND, MAC, AUTN) and sends it to the UE so as to trigger the running of the AKA algorithm.

In step 1309, the access point receives MM: Authenticate Request (RES, MAC) from the UE and maps it to the EAP-Response/AKA-challenge (RES, MAC) which will authenticate the UE vis a vis the AAA server.

In the standard signalling (TS 23.234 section 6.1.5), the AAA server would only deliver the Master Session Key associated with the UE's IMSI. However, in this case, in step 1311, the AAA server adds two extra AVPs, namely the Confidentiality Key AKA, and the Integrity Key AKA to the Authentication Answer, so as to make CK and IK available in the PDG.

If the tunnel is authorized in steps 1312-1314, in step 1315 the PDG delivers the CK and IK to the access point via the CFG_REPLY payload, which will now carry the CK and IK attributes in addition to the remote IP address.

In order to make sure that only the access point can access the CK and IK, the PDG encrypts the keys with the pre-shared secret, MSK_ZAP. This can be achieved in a number of ways but the specific way needs to be agreed with the Home MNO Network provider.

In step 1316, the access point uses the shared secret MSK_ZAP to decrypt the CK and IK payloads. The access point can then generate MSK_UE (as defined in [EAP-AKA] section 6.4 "Key generation"), which is used to generate the correct AUTH payload (as defined in [IKEv2] section 2.16 "Extensible Authentication Protocol Methods").

On the other hand the access point uses CK and IK for encryption and integrity protection over the air interface.

In step 1317, the PDG checks the AUTH thus authenticating the tunnel and generates its own AUTH payload. The access point uses the MSK_UE to check the validity of the AUTH thus authenticating the PDG.

As shown in Figure 11, and described with reference thereto, a different architecture apples in the case of the "Out of band" solution. In this solution, during the UE-specific tunnel establishment, the access point obtains the UE-specific keying material by directly querying the AAA server in the Home MNO Network for the necessary UE-specific keying material, i.e. CK and IK in case of UMTS attach and Kc in case of GSM attach. This query is performed via RADIUS or DIAMETER via the Wax interface described above, and introduced to support the access point-SIP solution.

In this solution the UE-specific tunnel establishment follows the same procedure as that shown in Figure 13, up to the point at which the access point receives the IKE_AUTH Response carrying the EAP Success message, which signals to the access point that the AAA server has successfully performed the EAP authentication for the UE. At this point, the access point needs to retrieve the UE-specific keying material from the AAA server so as to authenticate itself towards the PDG and start using ciphering and integrity protection over the air interface. This material is part of the authentication vector used by the AAA server during the successful EAP-based mutual authentication between the access point (by querying the UE with the GSM/UMTS Authentication Procedure) and the AAA server that just took place.

Where DIAMETER is used, then the application defined in TS 29.234 for the Wx interface of the 3GPP WLAN interworking framework, for AAA server retrieval of authentication vectors from HSS, can be re-used.

The access point 50 sends an Authentication Request to the AAA server, having the format:

| Information element name | Mapping to Diameter AVP | Value |
|---|---|---|
| Permanent User Identity | User-Name | IMSI_UE |
| Visited Network Identifier | Visited-Network-Identifier | IMSI_ZAP |
| Number Authentication Items | SIP-Number-Auth-Items | 1 |
| Authentication Data | SIP-Auth-Data-Item | See table below |

The Authentication Data content in the request has the format:

| Information element name | Mapping to Diameter AVP | Description |
|---|---|---|
| Authentication Method | Authentication Method | EAP/SIM or EAP/AKA |

The AAA server sends an Authentication Answer to the access point 50, having the format:

| Information element name | Mapping to Diameter AVP | Value |
|---|---|---|
| Permanent User Identity | User-Name | IMSI_UE |
| Visited Network Identifier | Visited-Network-Identifier | IMSI_ZAP |
| Result | Result-Code/Experimental-Result | Success |
| Authentication Data | SIP-Auth-Data-Item | See tables below |

The Authentication Data content in the answer, in the EAP-AKA case, has the format:

| Information element name | Mapping to Diameter AVP | Description |
|---|---|---|
| Authentication Method | Authentication Method | EAP/AKA |
| Confidentiality Key AKA | Confidentiality -Key | CK |
| Integrity Key AKA | Integrity-Key | IK |

The Authentication Data content in the answer, in the EAP-SIM case, has the format:

| Information element name | Mapping to Diameter AVP | Description |
|---|---|---|
| Authentication Method | Authentication Method | EAP/AKA |
| Authentication Information SIM | Authentication Information SIM | concatenation of authentication challenge RAND and the ciphering key Kc |

There are therefore described methods whereby a base station provided with a SIM card can authenticate itself to a network,

## Claims

1. A base station for a cellular communications network, for allowing a user device to connect into the cellular communications network, the base station comprising a SIM card carrying an IMSI, the base station being **characterised in that** the IMSI can be used to identify the basestation to the cellular communications network, authenticate the basestation and establish secure communications with the cellular communications network, using the same mechanism that is used for mobile terminals containing SIM cards which access the cellular communications network.

2. A base station as claimed in claim 1, including SIP client software, such that communications in accordance with a GSM/UMTS protocol can be mapped onto corresponding SIP services.

3. A base station as claimed in claim 1 or 2, including UMA client software, such that the base station can communicate over a broadband IP network with a UMA UNC in the core network of the cellular communications system.

4. A base station as claimed in claim 3, wherein software in the base station is adapted to map communications in accordance with a GSM/UMTS protocol to the UMA protocol.

5. A base station as claimed in any preceding claim, including IPSec software, whereby the base station is able to provide an encrypted and secure transmission medium between the base station and a core network of the cellular communications system.

6. A base station as claimed in claim 5, wherein the base station is adapted to receive ciphering keys from the core network of the cellular communications system.

7. A base station as claimed in claim 6, wherein the base station is adapted to cipher and decipher messages transmitted between the base station and a mobile station, using at least one ciphering key received from the core network of the cellular communications system.

8. A base station as claimed in any preceding claim, wherein the base station is adapted to use identifying data stored on the SIM card to identify itself to a core network of the cellular communications system, such that it is recognised as a mobile device and is enabled to originate and terminate messages and calls.

9. A base station as claimed in claim 8, wherein the base station is adapted to use the identifying data stored on the SIM card to set up an IPSec tunnel with the core network of the cellular communications system.

10. A base station as claimed in any preceding claim, wherein the base station is adapted to act as a proxy for any communications device connected thereto over a wireless communications protocol, such that the communications device is enabled to communicate with a core network of the cellular communications system.

11. A base station as claimed in claim 1, wherein the base station is adapted to receive and act upon an SMS message from a pre-registered user, instructing the base station to perform a specific function.

12. A base station as claimed in claim 11, wherein the specific function comprises maintaining a database.

13. A base station as claimed in claim 12, wherein the base station is further adapted to update an associated management system with any changes to said database.

14. A base station as claimed in claim 11, wherein the specific function comprises controlling a device connected to a user's Local Area Network.

15. A base station as claimed in claim 1, wherein the base station is adapted to send an SMS or MMS message to a user, in response to a predefined condition.

16. A base station as claimed in claim 15, wherein the predefined condition relates to operation of the base station.

17. A base station as claimed in claim 15, wherein the predefined condition relates to a device connected to a user's Local Area Network.

18. A base station as claimed in one of claims 15 to 17, wherein, if a mobile communications device of the user is camped on the base station, said SMS or MMS message is sent to said user directly, without passing through a core network of the cellular communications system.

19. A base station as claimed in claim 1, wherein the base station is adapted to receive and act upon a call or data session initiated by a user in wide area network, such that the user can access information on the user's Local Area Network.

20. A base station as claimed in claim 1, wherein the base station is adapted to initiate a call or data session to a user, in response to a predefined condition.

21. A base station as claimed in claim 20, wherein the predefined condition relates to a device connected to a user's Local Area Network.

22. A base station as claimed in one of claims 20 to 21, wherein, if a mobile communications device of the user is camped on the base station, said call or data session is initiated with said user directly, without passing through a core network of the cellular communications system.

## Patentansprüche

1. Basisstation für ein zellulares Kommunikationsnetzwerk, um einer Benutzervorrichtung zu erlauben, sich mit dem zellularen Kommunikationsnetzwerk zu verbinden, wobei die Basisstation eine SIM-Karte umfasst, die eine IMSI trägt, wobei die Basisstation **dadurch gekennzeichnet ist, dass** die IMSI verwendet werden kann, um die Basisstation für das zellulare Kommunikationsnetzwerk zu identifizieren, die Basisstation zu authentifizieren und um sichere Kommunikationen mit dem zellularen Kommunikationsnetzwerk unter Verwendung desselben Mechanismus zu erstellen, der für mobile Endgeräte verwendet wird, die SIM-Karten enthalten, welche auf das zellulare Kommunikationsnetzwerk zugreifen.

2. Basisstation nach Anspruch 1, SIP-Clientsoftware aufweisend, dergestalt, dass Kommunikationen in Übereinstimmung mit einem GSM/UMTS-Protokoll auf entsprechende SIP-Dienste abgebildet werden können.

3. Basisstation nach Anspruch 1 oder 2, UMA-Clientsoftware aufweisend, dergestalt, dass die Basisstation über ein Breitband-IP-Netzwerk mit einem UMA UNC in dem Kernnetzwerk des zellularen Kommunikationsnetzwerkes kommunizieren kann.

4. Basisstation nach Anspruch 3, wobei Software in der Basisstation dazu eingerichtet ist, Kommunikationen in Übereinstimmung mit einem GSM/UMTS-Protokoll auf das UMA-Protokoll abzubilden.

5. Basisstation nach irgendeinem vorhergehenden Anspruch, IPSec-Software aufweisend, wobei die Basisstation in der Lage ist, ein verschlüsseltes und sicheres Übertragungsmedium zwischen der Basisstation und einem Kernnetzwerk des zellularen Kommunikationsnetzwerkes bereitzustellen.

6. Basisstation nach Anspruch 5, wobei die Basisstation dazu eingerichtet ist, Verschlüsselungsschlüssel von dem Kernnetzwerk des zellularen Kommunikationssystems zu empfangen.

7. Basisstation nach Anspruch 6, wobei die Basisstation dazu eingerichtet ist, Mitteilungen, die zwischen der Basisstation und einer Mobilstation übertragen werden, unter Verwendung mindestens eines Verschlüsselungsschlüssels zu verschlüsseln und entschlüsseln, der von dem Kernnetzwerk des zellularen Kommunikationssystems empfangen wird.

8. Basisstation nach irgendeinem vorhergehenden Anspruch, wobei die Basisstation dazu eingerichtet ist, identifizierende Daten zu verwenden, die auf der SIM-Karte gespeichert sind, um sich selbst gegenüber einem Kernnetzwerk des zellularen Kommunikationssystems zu identifizieren, sodass es als eine Mobilvorrichtung erkannt und aktiviert wird, um Mitteilungen und Anrufe zu tätigen und anzunehmen.

9. Basisstation nach Anspruch 8, wobei die Basisstation dazu eingerichtet ist, die identifizierenden Daten zu verwenden, die auf der SIM-Karte gespeichert sind, um einen IPSec-Tunnel mit dem Kernnetzwerk des zellularen Kommunikationssystems einzurichten.

10. Basisstation nach irgendeinem vorhergehenden Anspruch, wobei die Basisstation dazu eingerichtet ist, als Proxy für beliebige Kommunikationsvorrichtungen zu dienen, die damit über ein drahtloses Kommunikationsprotokoll verbunden sind, so dass die Kommunikationsvorrichtung dazu aktiviert ist, mit einem Kernnetzwerk des zellularen Kommunikationssystems zu kommunizieren.

11. Basisstation nach Anspruch 1, wobei die Basisstation dazu eingerichtet ist, eine SMS-Mitteilung von einem zuvor registrierten Benutzer zu empfangen und darauf zu reagieren, mit welcher die Basisstation angewiesen wird, eine spezifische Funktion auszuführen.

12. Basisstation nach Anspruch 11, wobei die spezifische Funktion das Aufrechterhalten einer Datenbank umfasst.

13. Basisstation nach Anspruch 12, wobei die Basisstation des Weiteren dazu eingerichtet ist, ein zugeordnetes Managementsystem mit beliebigen Änderungen der Datenbank zu aktualisieren.

14. Basisstation nach Anspruch 11, wobei die spezifische Funktion das Steuern einer Vorrichtung umfasst, die mit einem lokalen Bereichsnetzwerk des Benutzers verbunden ist.

15. Basisstation nach Anspruch 1, wobei die Basisstation dazu eingerichtet ist, eine SMS- oder MMS-Mitteilung an einen Benutzer als Antwort auf eine zuvor definierte Bedingung zu schicken.

16. Basisstation nach Anspruch 15, wobei die zuvor definierte Bedingung sich auf eine Operation der Basisstation bezieht.

17. Basisstation nach Anspruch 15, wobei die zuvor definierte Bedingung sich auf eine Vorrichtung bezieht, die mit einem Lokalen Bereichsnetzwerk des Benutzers verbunden ist.

18. Basisstation nach einem der Ansprüche 15 bis 17, wobei, wenn eine Mobilkommunikationsvorrichtung des Benutzers in die Basisstation eingebucht ist, die SMS- oder MMS-Mitteilung direkt an den Benutzer gesendet wird, ohne über ein Kernnetzwerk des zellularen Kommunikationssystems zu gehen.

19. Basisstation nach Anspruch 1, wobei die Basisstation dazu eingerichtet ist, eine Ruf- oder Datensitzung, die durch einen Benutzer im weiten Bereichsnetzwerk initiiert wird, zu empfangen und darauf dergestalt zu agieren, dass der Benutzer auf Informationen in dem lokalen Bereichsnetzwerk des Benutzers zugreifen kann.

20. Basisstation nach Anspruch 1, wobei die Basisstation dazu eingerichtet ist, eine Ruf- oder Datensitzung an einen Benutzer als Antwort auf eine zuvor definierte Bedingung zu initiieren.

21. Basisstation nach Anspruch 20, wobei die zuvor definierte Bedingung sich auf eine Vorrichtung bezieht, die mit einem lokalen Bereichsnetzwerk des Benutzers verbunden ist.

22. Basisstation nach einem der Ansprüche 20 bis 21, wobei, wenn eine Mobilkommunikationsvorrichtung des Benutzers in die Basisstation eingebucht ist, die Ruf- oder Datensitzung direkt mit dem Benutzer initiiert wird, ohne über ein Kernnetzwerk des zellularen Kommunikationssystems zu gehen.

## Revendications

1. Station de base pour un réseau de communication cellulaire pour permettre à un dispositif d'utilisateur de se connecter au réseau de communication cellulaire, la station de base comprenant une carte SIM avec une IMSI, la station de base étant **caractérisée en ce que** l'IMSI peut être utilisée pour identifier la station de base au réseau de communication cellulaire et établir des communications sûres avec le réseau de communication cellulaire, en utilisant le même mécanisme qui est utilisé pour des terminaux mobiles comportant une carte SIM qui accède au réseau de communication cellulaire.

2. Station de base selon la revendication 1, comportant un logiciel SIP de client de façon que des communications selon un protocole GSM/UMTS puissent être affectées à des services SIP correspondants.

3. Station de base selon la revendication 1 ou 2, comprenant un logiciel UMA de client de façon que la station de base puisse communiquer sur un réseau IP à large bande avec un UMA UNC au réseau central du système de communication cellulaire.

4. Station de base selon la revendication 3, **caractérisée en ce que** le logiciel dans la station de base est adapté pour affecter des communications selon un protocole GSM/UMTS à un protocole UMA.

5. Station de base selon l'une des revendications précédentes, comprenant un logiciel IPSec, par lequel la station de base est capable de fournir un moyen de transmission crypté et sécurisé entre la station de base et un réseau central du système de communication cellulaire.

6. Station de base selon la revendication 5, **caractérisée en ce que** la station de base est adaptée pour recevoir des clés de cryptage du réseau central du système de communication cellulaire.

7. Station de base selon la revendication 6, **caractérisée en ce que** la station de base est adaptée pour crypter et décrypter des messages transmis entre la station de base et une station mobile, utilisant au moins une clé de cryptage reçue du réseau central du système de communication cellulaire.

8. Station de base selon l'une quelconque des revendications précédentes, **caractérisée en ce que** la station de base est adaptée pour utiliser des données d'identification stockées sur la carte SIM pour s'identifier elle-même à un réseau central du système de communication cellulaire de façon qu'elle soit reconnue comme un dispositif mobile et soit autorisée à envoyer et recevoir des messages et appels.

9. Station de base selon la revendication 8, **caractérisée en ce que** la station de base est adaptée pour utiliser les données d'identification stockées sur la carte SIM pour établir un tunnel IPSec avec le réseau central du système de communication cellulaire.

10. Station de base selon l'une quelconque des revendications précédentes, **caractérisée en ce que** la station de base est adaptée pour agir comme un intermédiaire pour tout dispositif de communication connecté à elle par un protocole de transmission sans fil, de façon que le dispositif de communication soit autorisé à communiquer avec un réseau central du système de communication cellulaire.

11. Station de base selon la revendication 1, **caractérisée en ce que** la station de base est adaptée pour recevoir et agir sur un message SMS d'un utilisateur pré-enregistré donnant instruction à la station de base d'effectuer une fonction particulière.

12. Station de base selon la revendication 11, **caractérisée en ce que** la fonction particulière comprend maintenir une base de données.

13. Station de base selon la revendication 12, **caractérisée en ce que** la station de base est adaptée en outre pour mettre à jour un système associé de gestion avec tout changement de la base de données.

14. Station de base selon la revendication 11, **caractérisée en ce que** la fonction particulière comprend commander un dispositif connecté à un réseau LNA d'un utilisateur.

15. Station de base selon la revendication 1, **caractérisée en ce que** la station de base est adaptée pour envoyer un message SMS ou MMS à un utilisateur, en réaction à une condition prédéterminée.

16. Station de base selon la revendication 15, **caractérisée en ce que** la condition prédéterminée est en relation avec le fonctionnement de la station de base.

17. Station de base selon la revendication 15, **caractérisée en ce que** la condition prédéterminée est en relation avec un dispositif connecté à un réseau LNA d'un utilisateur.

18. Station de base selon l'une des revendication 15 à 17, **caractérisée en ce que**, lorsqu'un dispositif de communication mobile est logé sur la station de base, le message SMS ou MMS est envoyé directement à l'utilisateur sans passer par un réseau central du système de communication cellulaire.

19. Station de base selon la revendication 1, **caractérisée en ce que** la station de base est adaptée pour recevoir et agir sur une session d'appel ou de données initiée par un utilisateur dans un réseau étendu de façon que l'utilisateur puisse accéder aux informations sur le réseau LNA de l'utilisateur.

20. Station de base selon la revendication 1, **caractérisée en ce que** la station de base est adaptée pour initier une session d'appel ou de données à un utilisateur, en réaction à une condition prédéterminée.

21. Station de base selon la revendication 20, **caractérisée en ce que** la condition prédéterminée est en relation avec un dispositif connecté à un réseau LNA d'un utilisateur.

22. Station de base selon l'une quelconque des revendications 20 à 21, **caractérisée en ce que**, lorsqu'un dispositif de communication mobile est logé sur la station de base, la session d'appel ou de données est initiée directement avec l'utilisateur sans passer par un réseau central du système de communication cellulaire.
